(19) Europäisches Patentamt
European Patent Office
Office européen des brevets

(11) **EP 3 132 330 B1**

(12) **EUROPEAN PATENT SPECIFICATION**

(45) Date of publication and mention
of the grant of the patent:
**03.07.2019 Bulletin 2019/27**

(21) Application number: **15719103.2**

(22) Date of filing: **15.04.2015**

(51) Int Cl.:
**G06F 3/01** *(2006.01)*      **G06F 3/044** *(2006.01)*

(86) International application number:
**PCT/US2015/025968**

(87) International publication number:
**WO 2015/160948 (22.10.2015 Gazette 2015/42)**

(54) **DETERMINING TOUCH LOCATIONS AND FORCES THERETO ON A TOUCH AND FORCE SENSING SURFACE**

BESTIMMUNG DER BERÜHRUNGSSTELLEN UND -KRÄFTE AUF EINER BERÜHRUNGS- UND KRAFTEMPFINDLICHEN OBERFLÄCHE

DÉTERMINATION D'EMPLACEMENTS DE CONTACTS ET DE FORCES ASSOCIÉES SUR UNE SURFACE DE CAPTAGE DE CONTACT ET DE FORCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.04.2014 US 201414254098**

(43) Date of publication of application:
**22.02.2017 Bulletin 2017/08**

(73) Proprietor: **Neodrón Limited**
**Dublin 18, D18A094 (IE)**

(72) Inventors:
• **HANAUER, Jerry**
**Germantown, WI 53022 (US)**
• **LAMONT, Lance**
**Brookfield, WI 53005 (US)**
• **CURTIS, Keith, E.**
**Gilbert, AZ 85297 (US)**

(74) Representative: **Peterreins Schley**
**Patent- und Rechtsanwälte**
**Hermann-Sack-Strasse 3**
**80331 München (DE)**

(56) References cited:
**US-A1- 2009 231 305     US-A1- 2013 257 799**

EP 3 132 330 B1

## Description

The present disclosure relates to capacitive touch sensing, and more particularly, to touch sensing that determines both touch locations and pressure (force) applied at the touch locations.

Human interface devices include touch control systems that are based on touch sensing surfaces, *e.g.,* pads, screens, *etc.,* using capacitive sensors that change capacitance values when touched. Transforming the touch(es) on the touch sensor into one or more touch locations is non-trivial. Tracking one or more touches on the touch sensor is also challenging. Advanced touch control systems are capable of detecting not only a single touch and/or movement on a touch sensing surface such as a touch screen, but also so-called multi-touch scenarios in which a user touches more than one location and/or moves more than one finger over the respective touch sensing surface, *e.g.,* gesturing.

Key challenges of multi-touch systems are: limited processing speed of low cost systems, such as processing capabilities of, for example but not limited to, 8-bit microcontroller architectures as these architectures may be unable to do advanced math for processing the respective signals generated by the touch sensing device. There may also exist limited touch scanning performance, for example the entire system may be unable to reasonably sample the entire plane of the touch sensor or screen every "frame." Other challenges include having enough program memory space to provide for touch location determination programs that are concise, modular and general purpose. Limited random access memory (RAM) space may make the touch determination system unable to store multiple entire "images" of the touch detection and location(s) thereof simultaneously.

Hence, there exists a need to improve and simplify touch determination methods. Conventional solutions were threshold based and required complex computations. Hence, there is a need for touch determination methods that are more robust and less computation intensive. Furthermore, there exists a need for high quality multi-touch decoding, in particular, a method and/or system that can be implemented with, for example but not limited to, a low-cost 8-bit microcontroller architecture.

Present technology touch sensors generally can only determine a location of a touch thereto, but not a force value of the touch to the touch sensing surface. Being able to determine not only the X-Y coordinate location of a touch but also the force of that touch gives another control option that may be used with a device having a touch sensing surface with such force sensing feature.

US Patent Application Publication US 2013/0257799 discloses a method and system for multi-touch decoding. US Patent Application Publication US 2009/0231305 discloses a force imaging input device and system.

The aforementioned problems are solved, and other and further benefits achieved by a touch location and force determining method and system as defined in the independent claims. Preferred embodiments are defined in the dependent claims.

According to a further embodiment, the digital processor, memory, analog front end and ADC may be provided by a digital device. According to a further embodiment, the digital device may comprise a microcontroller. According to a further embodiment, the flexible electrically conductive cover may comprise a flexible metal substrate. According to a further embodiment, the flexible electrically conductive cover may comprise a flexible non-metal substrate and an electrically conductive coating on a surface thereof. According to a further embodiment, the flexible electrically conductive cover may comprise a substantially light transmissive flexible substrate and a coating of Indium Tin Oxide (ITO) on a surface of the flexible substrate. According to a further embodiment, the flexible electrically conductive cover may comprise a substantially light transmissive flexible substrate and a coating of Antimony Tin Oxide (ATO) on a surface of the flexible substrate.

A more complete understanding of the present disclosure thereof may be acquired by referring to the following description taken in conjunction with the accompanying drawings wherein:

Figure 1 illustrates a schematic block diagram of an electronic system having a capacitive touch sensor, a capacitive touch analog front end and a digital processor, according to the teachings of this disclosure;

Figure 2 illustrates schematic elevational views of metal over capacitive touch sensors, according to the teachings of this disclosure;

Figure 3 illustrates a schematic elevational view of a touch sensor capable of detecting both locations of touches thereto and forces of those touches, according to the teachings of this disclosure;

Figures 4A to 4D illustrate schematic plan views of touch sensors having various capacitive touch sensor configurations, according to the teachings of this disclosure;

Figures 4E and 4F illustrate schematic plan views of self and mutual capacitive touch detection of a single touch to a touch sensor, according to the teachings of this disclosure;

Figures 4G to 4K illustrate schematic plan views of self and mutual capacitive touch detection of two touches to a touch sensor, according to the teachings of this disclosure;

Figure 5 illustrates a schematic process flow diagram for multi-touch and force decoding of a touch sensor as shown in Figure 1, according to specific example embodiments of this disclosure;

Figure 6 illustrates a graph of single touch peak detection data, according to specific example embodiments of this disclosure;

Figure 7 illustrates a schematic plan diagram of potential touch and mutual touch locations of a touch sensor, according to specific example embodiments of this disclosure;

Figure 8 illustrates a schematic plan view diagram of a touch sensor showing a cache data window thereof, according to specific example embodiments of this disclosure;

Figure 9 illustrates a graph of self scan values and a table of mutual scan values for two touch peak detection data, according to specific example embodiments of this disclosure;

Figures 10 and 11 illustrate schematic diagrams of historic and current point locations used for a point weighting example, according to the teachings of this disclosure;

Figure 12 illustrates schematic drawings of a normal finger touch and a flat finger touch, according to the teachings of this disclosure;

Figures 13 to 23 illustrate schematic process flow diagrams for touch decoding and force determination of the decoded touch(es), according to specific example embodiments of this disclosure;

Figure 24 illustrates a schematic plan view of a finger of a hand touching a surface of a touch sensor;

Figure 25 illustrates a schematic plan view of two fingers of a hand touching a surface of a touch sensor;

Figure 26 illustrates a schematic plan view of a finger of a hand touching an object projected on a surface of a touch sensor;

Figure 27 illustrates a schematic plan view of a finger of a hand touching a document projected on a surface of a touch sensor; and

Figure 28 illustrates a schematic plan view of a finger of a hand touching one digit of a number projected on a surface of a touch sensor.

While the present disclosure is susceptible to various modifications and alternative forms, specific example embodiments thereof have been shown in the drawings and are herein described in detail. It should be understood, however, that the description herein of specific example embodiments is not intended to limit the disclosure to the particular forms disclosed herein, but on the contrary, this disclosure is to cover all modifications and equivalents as defined by the appended claims.

According to various embodiments, a series of optimized processes may be provided that scan a plurality of (electrically) conductive columns and rows arranged in a matrix on a surface, *e.g.,* touch sensor display or panel, and which identify and track a plurality of touches thereto and forces thereof. These processes may be further optimized for operation with a low cost 8-bit microcontroller, according to specific embodiments of this disclosure.

Once a touch has been established, a force thereof may be assigned to the touch based upon the magnitude of change of the capacitance values determined during scans of a touch sensor, as more fully described hereinabove. Also the touch forces applied to the touch sensor from the associated tracked touch points may be utilized in further determining three dimensional gesturing, *e.g.,* X, Y and Z positions and forces, respectively. For example, proportional force at a touch location(s) allows three dimensional control of an object projected onto a screen of the touch sensor. Differing pressures on multiple points, *e.g.,* during more than one touch (multiple fingers touching face of touch sensor), allows object rotation control. A touch at a certain force may allow selecting an object(s) and a touch at a difference, *e.g.,* greater force, may be used to fix the location(s) of the object(s) on the display of the touch sensor.

Rocking multi-touch presses to produce varying touch forces may be used for rotation of an object. A vertical motion, *e.g.,* vertical sliding, press may be used to scale a vertical size of an object. A horizontal motion, *e.g.,* horizontal sliding, press may be used to scale a horizontal size of an object. Touches with varying force may be used to flip through pages of a document. A varying force may be used to insert a page into a stack of pages of a document. A vertical or horizontal gesture and force may be used to activate a function, *e.g.,* empty trash bin icon. Varying touch pressure may be used to lift a page off of a document for transmission to another display. Varying touch pressure may change the scope of a gesture movement, *e.g.,* selecting a picture instead of the full document. Pressing with a sweeping gesture may be used for an object release and discard. Varying touch pressures may be used to select alpha-numeric characters or drop function boxes.

According to various embodiments, these processes utilize both self and mutual scans to perform an optimized scan of the plurality of conductive columns and rows used for touch sensing. Using that as the basis, the proposed processes may use a subset of the data from the plurality of conductive columns and rows in order to do all necessary processing for touch location identification and tracking. The various embodiments specifically focus on a low-resource requirement solution for achieving touch location identification and tracking.

According to various embodiments, self capacitances of either the conductive columns or rows may be measured first then mutual capacitances of only those conductive columns or rows may be measured in combination with the other axis of conductive rows or columns. The various embodiments disclosed herein overcome the problem of transforming these self and mutual capacitance measurements into one or more touches and forces thereof, and tracking these one or more touches and forces thereof through multiple frames of the capacitance measurements of the conductive columns or rows as described hereinabove.

According to various embodiments, at least one process may scan a plurality of conductive columns and rows arranged in a matrix, detect and track up to N touches, using various unique techniques disclosed and claimed herein. A process of peak detection examines slope ratios to accurately and quickly determine peak measurements. According to various embodiments, the challenge of tracking multiple touch locations may be solved through time on associated ones of the plurality of conductive columns or rows.

The various embodiments may allow for N touches to compensate for touches of different finger positions, *e.g.,* such as a flat finger, that prevents missed touches and substantially eliminates incorrect touches.

According to various embodiments, a process is provided for quickly identifying accurate touches instead of only looking at true peaks, wherein a "virtual" peak may be found by examining slope ratios using various techniques disclosed herein for touch identification. A combination of unique processes, according to the teachings of this disclosure, may be used to achieve better accuracy and speed improvements for multi-touch decoding. For example, a peak detection process may be implemented as a "fuzzy" peak detection process that examines slope relationships, not just signs of the slopes between the conductive columns measured. Furthermore, a so-called "nudge technique" may be used that "nudges" a potential touch location to a best location by examining adjacent values thereto. "Windowed" data cache may be used to accelerate processing in a low capacity RAM environment, *e.g.,* 8-bit microcontroller. Interpolation may be used to increase the touch location resolution based upon measured values adjacent thereto. Multi-touch tracking may be used to identify N touches through time. Multi-touch tracking may be used to track N touches through time. Weighted matching may be used in a weighting method to best match touch points over time. "Area" detection may use a process that allows easy area and/or pressure detection based upon the sum of the nudged values for a given touch location.

Significant accuracy and speed of decoding improvements may use a combination of novel techniques for use in a low memory capacity and low cost digital processor, *e.g.,* microcontroller, microprocessor, digital signal processor (DSP), application specific integrated circuit (ASIC), programmable logic array (PLA), *etc.* Various embodiments may track eight or more touches and forces thereof on, for example but not limited to, a 3.5 inch touch sensor capacitive sensor array. For example when using a Microchip PIC18F46K22 (64K ROM, <4K RAM) microcontroller.

Referring now to the drawings, the details of example embodiments are schematically illustrated. Like elements in the drawings will be represented by like numbers, and similar elements will be represented by like numbers with a different lower case letter suffix.

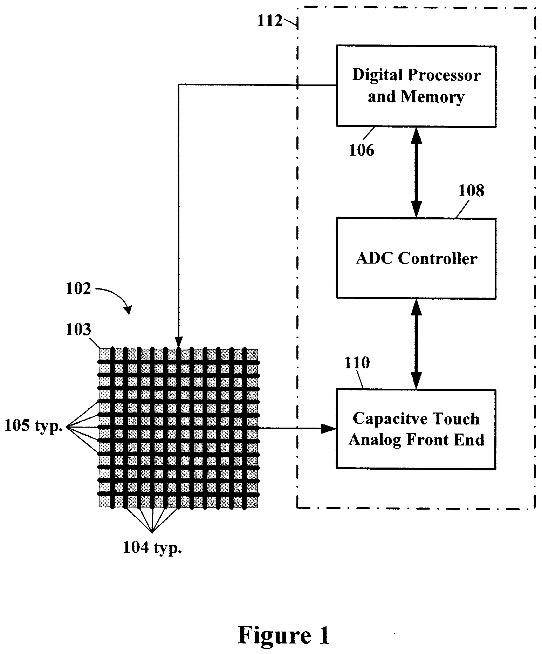

Referring to Figure 1, depicted is a schematic block diagram of an electronic system having a capacitive touch sensor, a capacitive touch analog front end and a digital processor, according to the teachings of this disclosure. A digital device 112 may comprise a digital processor and memory 106, an analog-to-digital converter (ADC) controller 108, and a capacitive touch analog front end (AFE) 110. The digital device 112 may be coupled to a touch sensor 102 comprised of a plurality of conductive columns 104 and rows 105 arranged in a matrix and having a flexible electrically conductive cover 103 thereover. It is contemplated that the conductive rows 105 and/or conductive columns 104 may be, for example but are not limited to, printed circuit board conductors, wires, Indium Tin Oxide (ITO) or Antimony Tin Oxide (ATO) coatings on a clear substrate, *e.g.,* display/touch screen, *etc.,* or any combinations thereof. The flexible electrically conductive cover 103 may comprise metal, conductive non-metallic material, ITO or ATO coating on a flexible clear substrate (plastic), *etc.* The digital device 112 may comprise a microcontroller, microprocessor, digital signal processor, application specific integrated circuit (ASIC), programmable logic array (PLA), *etc.,* and may further comprise one or more integrated circuits (not shown), packaged or unpackaged.

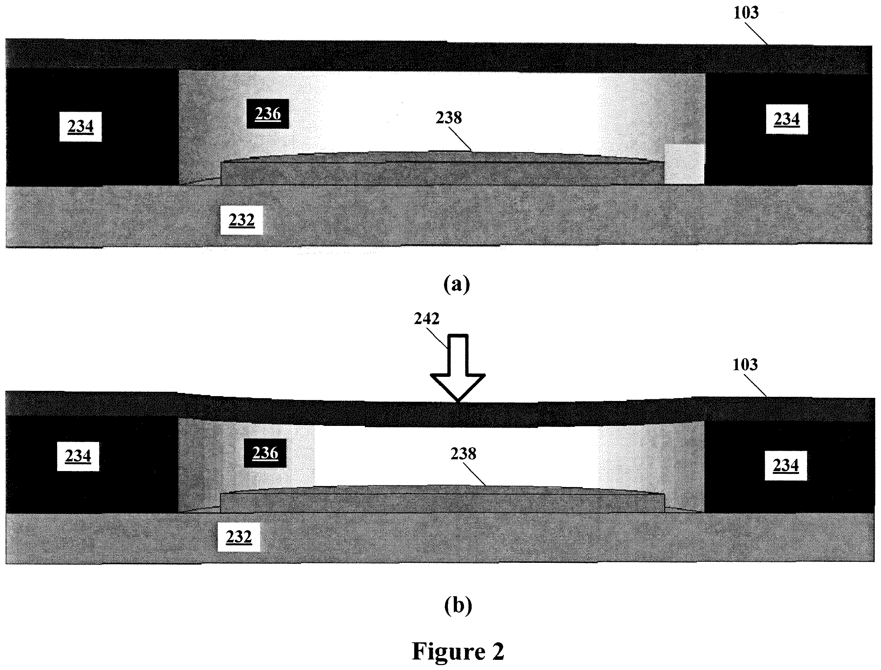

Referring to Figure 2, depicted are schematic elevational views of metal over capacitive touch sensors, according to the teachings of this disclosure. A capacitive sensor 238 is on a substrate 232. On either side of the capacitive sensor 238 are spacers 234, and an electrically conductive flexible cover 103, *e.g.,* metal, ITO or ATO coated plastic, *etc.;* is located on top of the spacers 234 and forms a chamber 236 over the capacitive sensor 238. When a force 242 is applied to a location on the flexible cover 103, the flexible cover 103 moves toward the capacitive sensor 238, thereby increasing the capacitance thereof. The capacitance value(s) of the capacitive sensor(s) 238 is measured and an increase in capacitance value thereof will indicate the location of the force 242 (*e.g.,* touch). The capacitance value of the capacitive sensor 238 will increase the closer the flexible cover 103 moves toward the face of the capacitive sensor 238. Metal over capacitive touch technology is more fully described in Application Note AN1325, entitled "mTouch™ Metal over Cap Technology" by Keith Curtis and Dieter Peter, available www.microchip.com.

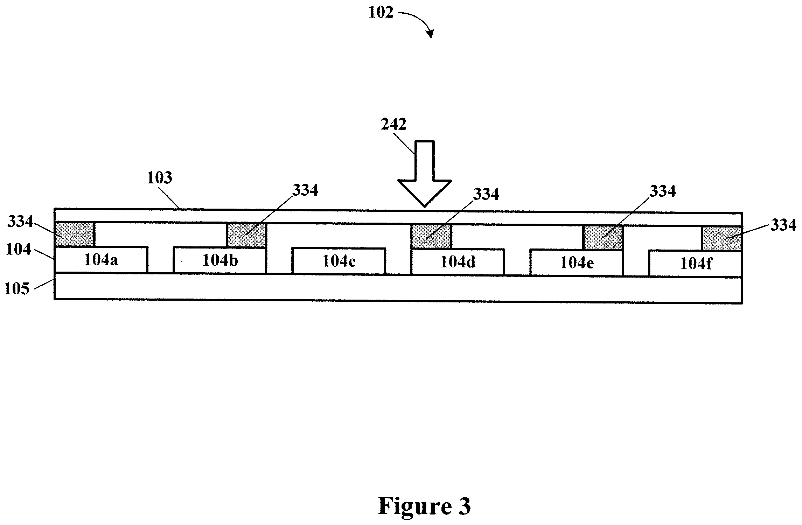

Referring to Figure 3, depicted is a schematic elevational view of a touch sensor capable of detecting both locations of touches thereto and forces of those touches, according to the teachings this disclosure. A touch sensor capable of detecting both a location of a touch(es) thereto and a force(s) of that touch(es) thereto, generally represented by the numeral 102, may comprise a plurality of conductive rows 105, a plurality of conductive columns 104, a plurality of deformable spacers 334, and a flexible electrically conductive cover 103.

The conductive columns 104 and the conductive rows 105 may be used in determining a location(s) of a touch(es), more fully described in Technical Bulletin TB3064, entitled "mTouch™ Projected Capacitive Touch Screen Sensing Theory of Operation" referenced hereinabove, and the magnitude of changes in the capacitance values of the conductive column(s) 104 at and around the touch location(s) may be used in determining the force 242 (amount of pressure applied at the touch location). The plurality of deformable spacers 334 may be used to maintain a constant spacing between the flexible conductive cover 103 and a front surface of the conductive columns 104 when no force 242 is being applied to the flexible electrically conductive cover 103. When force 242 is applied to a location on the flexible electrically conductive cover 103, the flexible electrically conductive cover 103 will be biased toward at least one conductive column 104, thereby increasing the capacitance thereof. Direct measurements of capacitance values and/or ratios of the capacitance values may be used in determining the magnitude of the force 242 being applied at the touch location(s).

Referring back to Figure 1, digital devices 112, *e.g.,* microcontrollers, now include peripherals that enhance the detection and evaluation of such capacitive value changes. More detailed descriptions of various capacitive touch system applications are more fully disclosed in Microchip Technology Incorporated application notes AN1298, AN1325 and AN1334, available at www.microchip.com.

One such application utilizes the capacitive voltage divider (CVD) method to determine a capacitance value and/or evaluate whether the capacitive value has changed. The CVD method is more fully described in Application Note AN1208, available at www.microchip.com; and a more detailed explanation of the CVD method is presented in commonly owned United States Patent Application Publication No. US 2010/0181180, entitled "Capacitive Touch Sensing using an Internal Capacitor of an Analog-To-Digital Converter (ADC) and a Voltage Reference," by Dieter Peter.

A Charge Time Measurement Unit (CTMU) may be used for very accurate capacitance measurements. The CTMU is more fully described in Microchip application notes AN1250 and AN1375, available at www.microchip.com, and commonly owned U.S. Patent Nos. US 7,460,441 B2, entitled "Measuring a long time period;" and US 7,764,213 B2, entitled "Current-time digital-to-analog converter," both by James E. Bartling.

It is contemplated that any type of capacitance measurement circuit having the necessary resolution may be used in determining the capacitance values of the plurality of conductive columns 104 and nodes (intersections of columns 104 and rows 105), and that a person having ordinary skill in the art of electronics and having the benefit of this disclosure could implement such a capacitance measurement circuit.

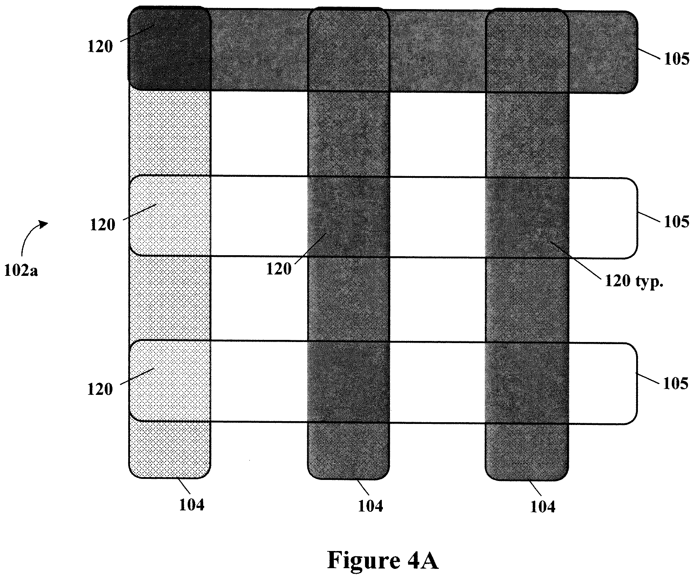

Referring to Figures 4A to 4D, depicted are schematic plan views of touch sensors having various capacitive touch sensor configurations, according to the teachings of this disclosure. Figure 4A shows conductive columns 104 and conductive rows 105. Each of the conductive columns 104 has a "self capacitance" that may be individually measured when in a quiescent state, or all of the conductive rows 105 may be actively excited while each one of the conductive columns 104 has self capacitance measurements made thereof. Active excitation of all of the conductive rows 105 may provide a stronger measurement signal for individual capacitive measurements of the conductive columns 104.

For example, if there is a touch detected on one of the conductive columns 104 during a self capacitance scan, then only that conductive column 104 having the touch detected thereon need be measured further during a mutual capacitance scan thereof. The self capacitance scan may only determine which one of the conductive columns 104 has been touched, but not at what location along the axis of that conductive column 104 where it was touched. The mutual capacitance scan may determine the touch location along the axis of that conductive column 104 by individually exciting (driving) one at a time the conductive rows 105 and measuring a mutual capacitance value for each one of the locations on that conductive column 104 that intersects (crosses over) the conductive rows 105. There may be an insulating non-conductive dielectric (not shown) between and separating the conductive columns 104 and the conductive rows 105. Where the conductive columns 104 intersect with (crossover) the conductive rows 105, mutual capacitors 120 are thereby formed. During the self capacitance scan above, all of the conductive rows 105 may be either grounded or driven with a logic signal, thereby forming individual column capacitors associated with each one of the conductive columns 104.

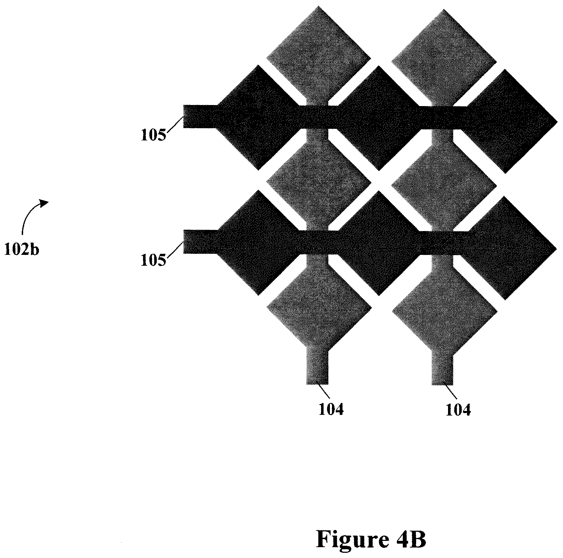

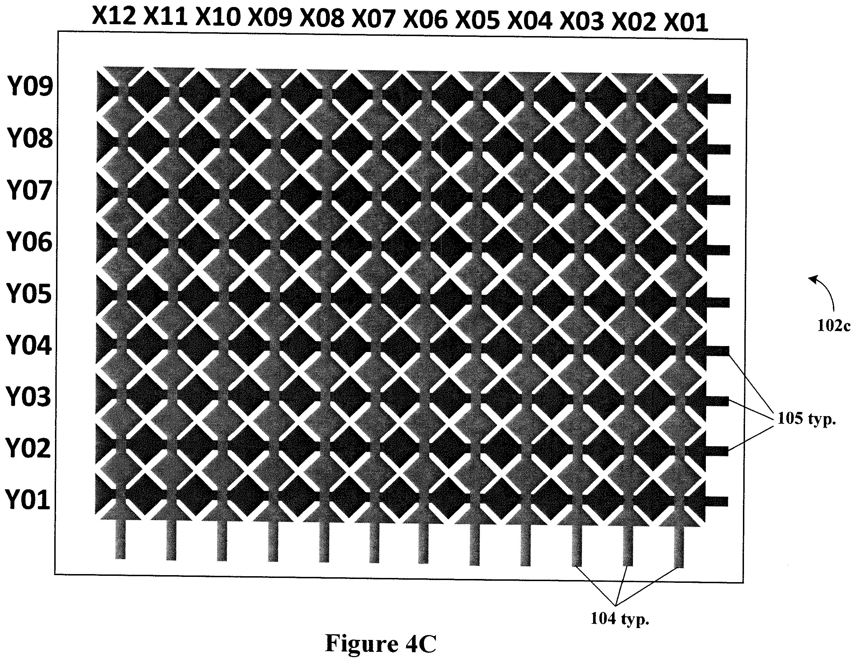

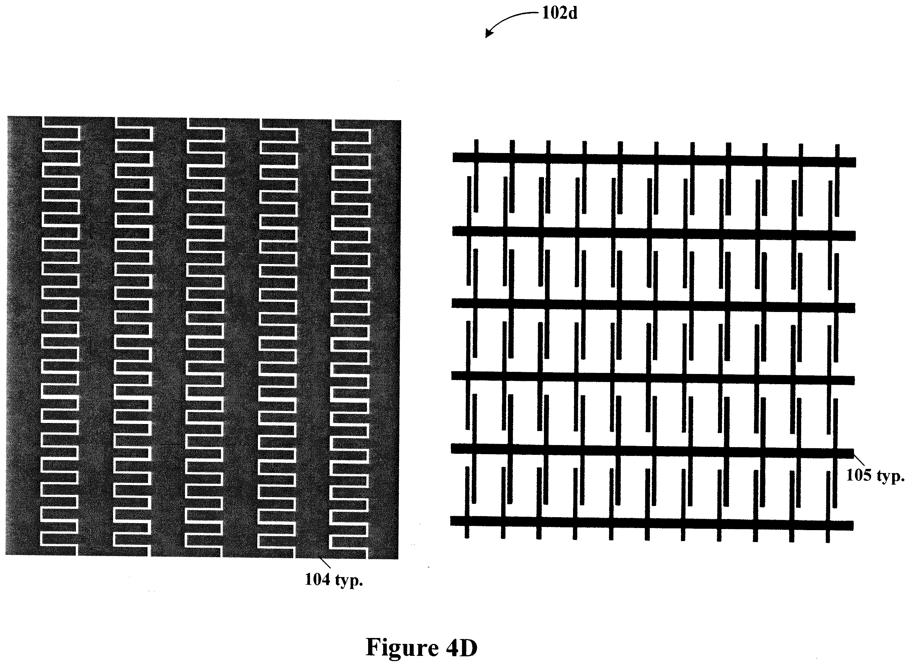

Figures 4B and 4C show interleaving of diamond shaped patterns of the conductive columns 104 and the conductive rows 105. This configuration may maximize exposure of each axis conductive column and/or row to a touch (*e.g.,* better sensitivity) with a smaller overlap between the conductive columns 104 and the conductive rows 105. Figure 4D shows receiver (top) conductive rows (*e.g.,* electrodes) 105a and transmitter (bottom) conductive columns 104a comprising comb like meshing fingers. The conductive columns 104a and conductive rows 105a are shown in a side-by-side plan view, but normally the top conductive rows 105a would be over the bottom conductive columns 104a. Self and mutual capacitive touch detection is more fully described in Technical Bulletin TB3064, entitled "mTouch™ Projected Capacitive Touch Screen Sensing Theory of Operation" by Todd O'Connor, available at www.microchip.com; and commonly owned United States Patent Application Publication No. US 2012/0113047, entitled "Capacitive Touch System Using Both Self and Mutual Capacitance" by Jerry Hanauer.

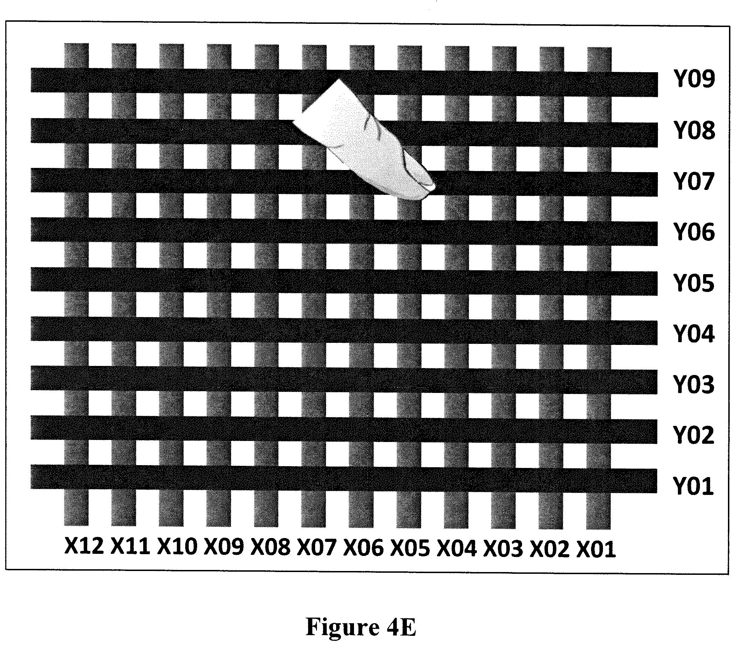

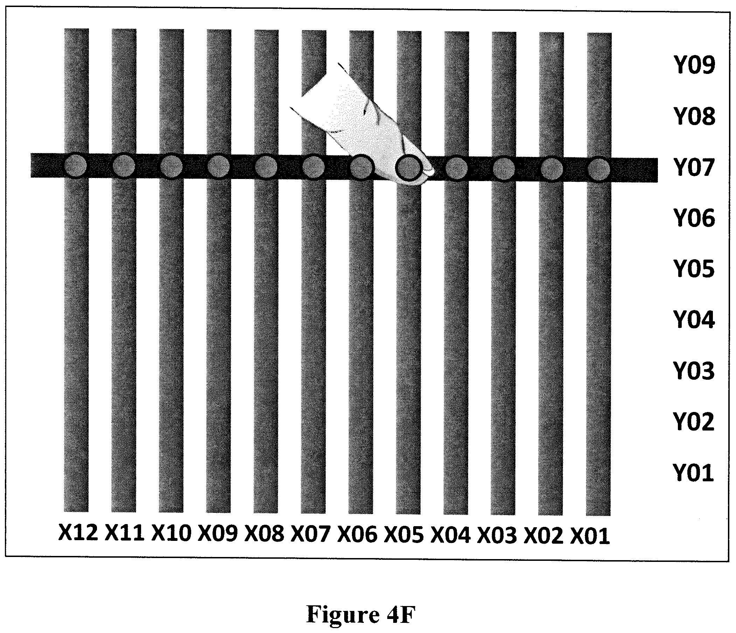

Referring to Figures 4E and 4F, depicted are schematic plan views of self and mutual capacitive touch detection of a single touch to a touch sensor, according to the teachings of this disclosure. In Figure 4E a touch, represented by a picture of a part of a finger, is at approximately the coordinates of X05, Y07. During self capacitive touch detection each one of the rows Y01 to Y09 may be measured to the determine the capacitance values thereof. Note that baseline capacitance values with no touches thereto for each one of the rows Y01 to Y09 have been taken and stored in a memory (*e.g.,* memory 106 - Figure 1). Any significant capacitance change to the baseline capacitance values of the rows Y01 to Y09 will be obvious and taken as a finger touch. In the example shown in Figure 4E the finger is touching row Y07 and the capacitance value of that row will change, indicating a touch thereto. However it is still unknown from the self capacitance measurements where on this row that the touch has occurred.

Once the touched row (Y07) has been determined using the self capacitance change thereof, mutual capacitive detection may be used in determining where on the touched row (Y07) the touch has occurred. This may be accomplished by exciting, *e.g.,* putting a voltage pulse on, each of the columns X01 to X12 one at a time while measuring the capacitance value of row Y07 when each of the columns X01 to X12 is individually excited. The column (X05) excitation that causes the largest change in the capacitance value of row Y07 will be the location on that row which corresponds to the intersection of column X05 with row Y07, thus the single touch is at point or node X05, Y07. Using self and mutual capacitance touch detection significantly reduces the number of row and column scans to obtain the X,Y touch coordinate on the touch sensor 102. In this example, nine (9) rows were scanned during self capacitive touch detection and twelve (12) columns were scanned during mutual capacitive touch detection for a total number of 9+12 = 21 scans. If individual x-y capacitive touch sensors for each node (location) were used then 9 x 12 = 108 scans would be necessary to find this one touch, a significant difference. It is contemplated that the self capacitances of the columns X01 to X21 may be determined first then mutual capacitances determined of a selected column(s) by exciting each row Y01 to Y09 to find the touch location on the selected column(s).

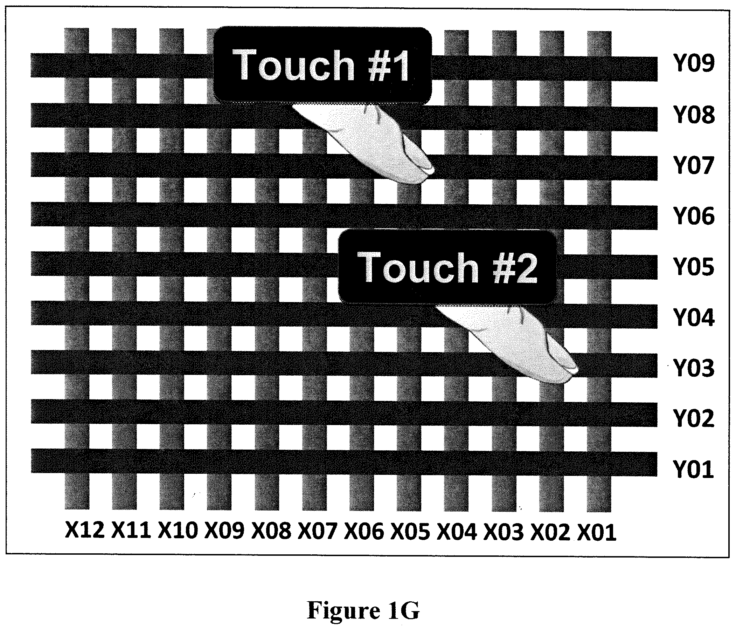

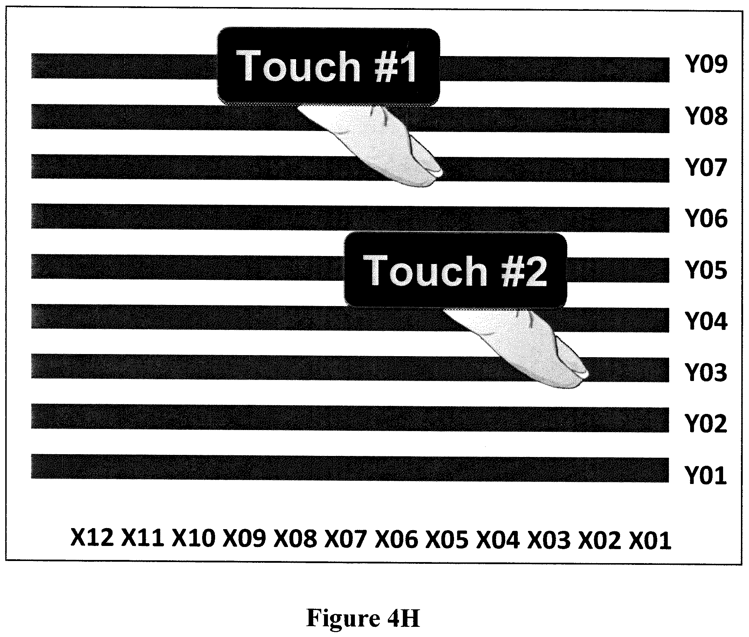

Referring to Figures 4G to 4K, depicted are schematic plan views of self and mutual capacitive touch detection of two touches to a touch sensor, according to the teachings of this disclosure. In Figure 4G two touches, represented by a picture of parts of two fingers, are at approximately the coordinates of X05, Y07 for touch #1 and X02, Y03 for touch #2. During self capacitive touch detection each one of the rows Y01 to Y09 may be measured to the determine the capacitance values thereof. Note that baseline capacitance values with no touches thereto for each one of the rows Y01 to Y09 have been taken and stored in a memory (*e.g.,* memory 106 - Figure 1). Any significant capacitance changes to the baseline capacitance values of the rows Y01 to Y09 will be obvious and taken as finger touches. In the example shown in Figure 4H the first finger is touching row Y07 and the second finger is touching row Y03, wherein the capacitance values of those two rows will change, indicating touches thereto. However it is still unknown from the self capacitance measurements where on these two row that the touches have occurred.

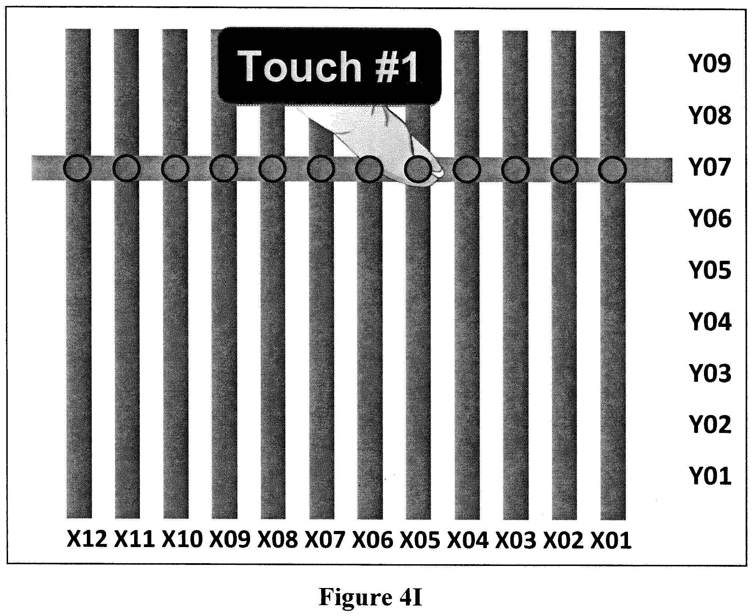

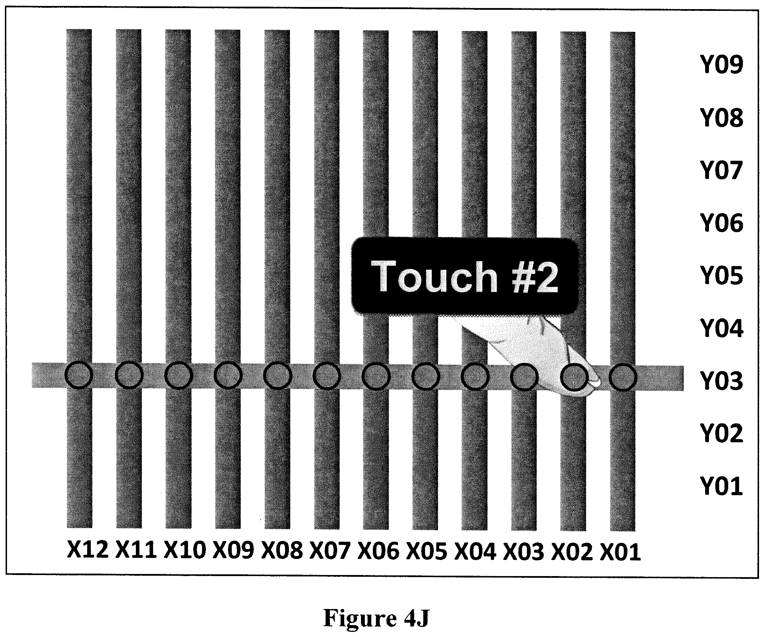

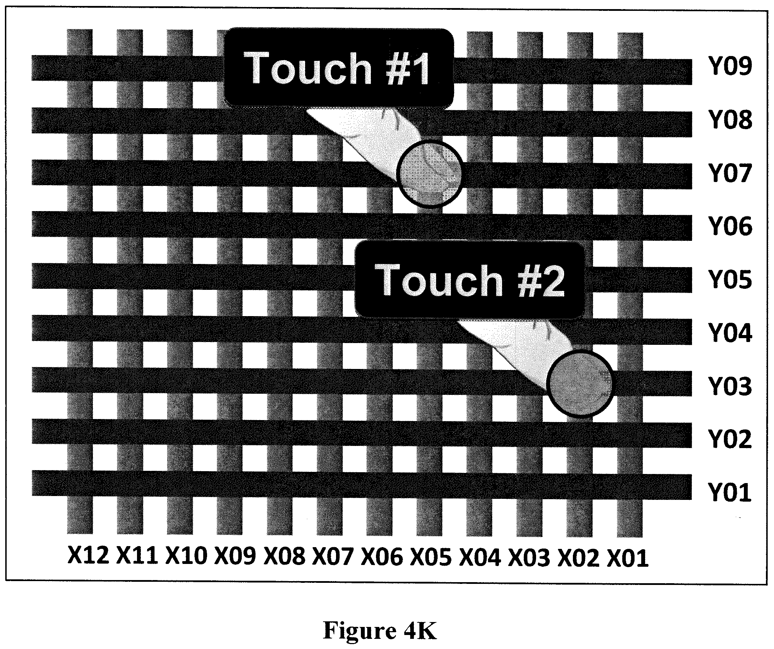

Once the touched rows (Y07 and Y03) have been determined using the self capacitance changes thereof, mutual capacitive detection may be used in determining where on these two touched rows (Y07 and Y03) the touches have occurred. Referring to Figure 4I, this may be accomplished by exciting, *e.g.,* putting a voltage pulse on, each of the columns X01 to X12 one at a time while measuring the capacitance value of row Y07 when each of the columns X01 to X12 is individually excited. The column (X05) excitation that causes the largest change in the capacitance value of row Y07 will be the location on that row that corresponds to the intersection of column X05 with row Y07. Referring to Figure 4J, likewise measuring the capacitance value of row Y03 when each of the columns X01 to X12 is individually excited determines where on column Y03 the touch #2 has occurred. Referring to Figure 4K, the two touches are at points or nodes (X05, Y07) and (X02, Y03). It is contemplated that if the capacitances of more than one of the selected rows, *e.g.,* Y07 and Y03, can be measured simultaneously, then only one set of individual column X01 to X12 excitations is needed in determining the two touches to the touch sensor 102.

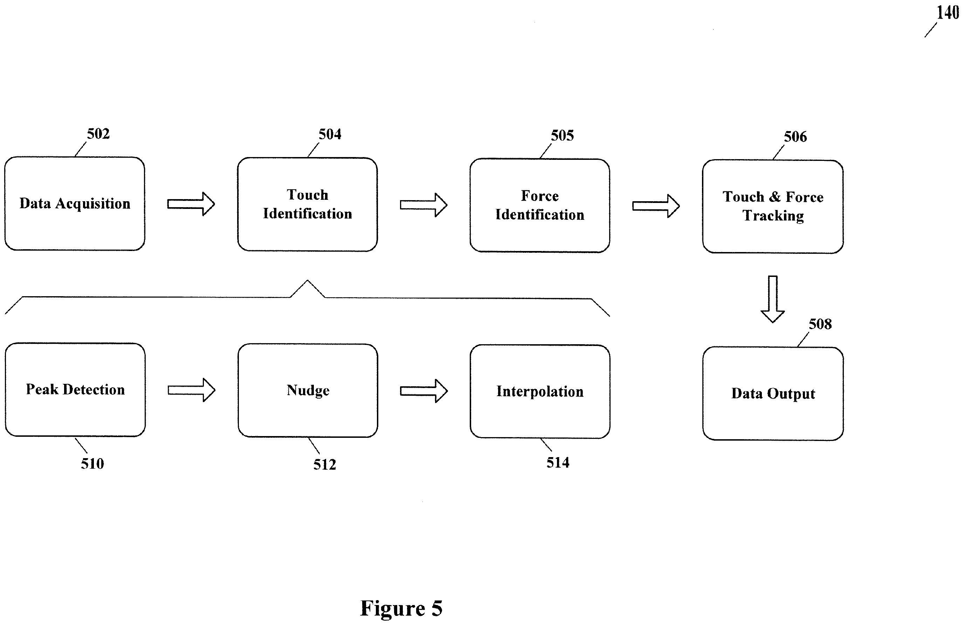

Referring to Figure 5, depicted is a schematic process flow diagram for multi-touch and force decoding of a touch sensor as shown in Figure 1, according to specific example embodiments of this disclosure. A process of multi-touch decoding may comprise the steps of Data Acquisition 502, Touch Identification 504, Force Identification 505, Touch and Force Tracking 506, and Data Output 508. The step of Touch Identification 504 may further comprise the steps of Peak Detection 510, Nudge 512 and Interpolation 514, more fully described hereinafter.

### Data Acquisition

Data Acquisition 502 is the process of taking self capacitance measurements of the plurality of conductive columns 104 or conductive rows 105, and then mutual capacitance measurements of selected ones of the plurality of conductive columns 104 or conductive rows 105, and intersections of the plurality of conductive rows 105 or conductive columns 104, respectively therewith, to acquire touch identification data. The touch identification data may be further processed to locate potential touches and forces thereto on the touch sensor 102 using the process of Touch Identification 504 and Force Identification 505, respectively, as more fully described hereinafter.

### Touch Identification

Touch Identification 504 is the process of using the touch identification data acquired during the process of Data Acquisition 502 to locate potential touches on the touch sensor 102. The following are a sequence of process steps to determine which ones of the plurality of conductive columns 104 or conductive rows 105 to select that have a touch(es) thereto using self capacitance measurements thereof, and where on the selected conductive columns 104 or conductive rows 105 the touch(es) may have occurred using mutual capacitance measurements thereof.

**Peak Detection**

Peak detection 510 is the process of identifying where potential touch locations may be on the touch sensor 102. However according to the teachings of this disclosure, instead of only looking at actual detected "peaks," peak detection may purposely be made "fuzzy," *e.g.,* identifying potential peaks by looking for ratios of differences of slope values as well as slope "signs," not just a low-high-low value sequence. A "virtual" peak may be detected by examining slope ratios, *e.g.,* 2:1 slope ratio, wherein a change in slope may be identified as a potential peak. This may be repeated until no additional peaks are detected.

**Nudge**

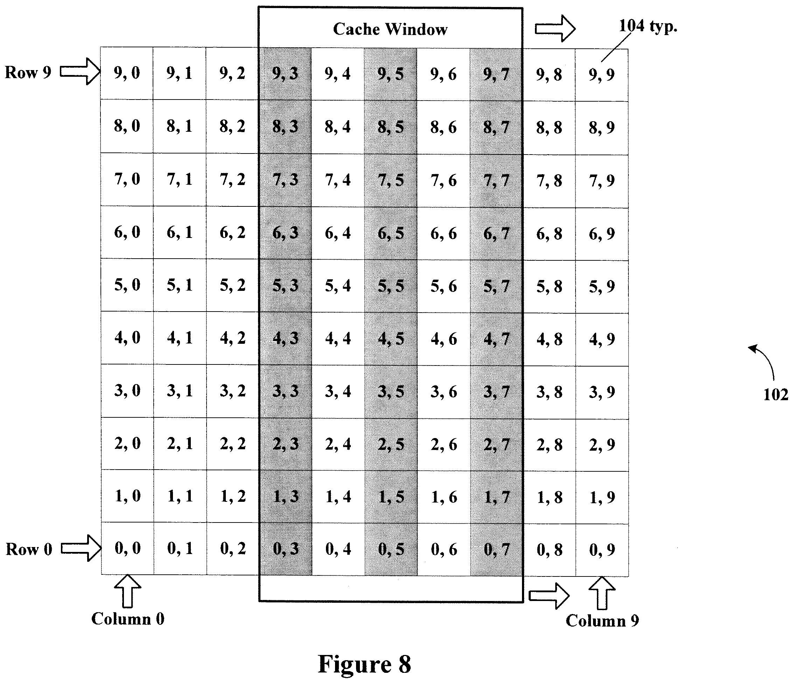

Nudge 512 is the process of examining each adjacent location of a potential touch location once it has been identified. If the adjacent location(s) has a greater value than the existing touch potential location then eliminate the current potential touch location and identify the adjacent location having the greater value as the potential touch location (see Figure 8 and the description thereof hereinafter).

**Interpolation**

Once a touch location has been identified, Interpolation 514 is the process that examines the adjacent values to generate a higher resolution location.

**Force Identification**

Force Identification 505 is the process of using some of the touch identification data acquired during the process of Data Acquisition 502 in combination with the potential touch locations identified during the process of Touch Identification 504. The mutual capacitance measurements associated with the potential touch locations, determined during the process of Touch Identification 504, may be compared with reference capacitance values of those same locations with no touches applied thereto (smaller capacitance values). The magnitude of a capacitance change may thereby be used in determining the force applied by the associated potential touch previously determined.

**Touch and Force Tracking**

Touch and Force Tracking 506 is the process of comparing time sequential "frames" of touch identification data and then determining which touches are associated between sequential frames. A combination of weighting and "best guess" matching may be used to track touches and forces thereof through multiple frames during the process of Data Acquisition 502 described hereinabove. This is repeated for every peak detected and every touch that was identified on the previous frame. A "frame" is the set of self and mutual capacitive measurements of the plurality of conductive columns 104 or conductive rows 105 in order to capture a single set of touches at a specific time. Each full set of scans (a "frame") of the self and mutual capacitance measurements of the plurality of conductive columns 104 or conductive rows 105 to acquire touch identification data of the touch sensor 102 at a given time associated with that frame.

Touch and Force Tracking 506 associates a given touch in one frame with a given touch in a subsequent frame. Touch and Force tracking may create a history of touch frames, and may associate the touch locations of a current frame with the touch locations of a previous frame or frames. In order to associate a previous touch location to a current potential touch location a "weighting" function may be used. The weight values ("weight" and "weight values" will be used interchangeably herein) between time sequential touch locations (of different frames) represent the likelihood that time sequential touch locations (of different frames) are associated with each other. Distance calculations may be used to assign weight values between these associated touch locations. A "true" but complex and processor intensive calculation for determining weight value between touch locations is:

$$\text{Weight value} = \text{SQRT} \left[ (X_{previous} - X_{current})^2 + (Y_{previous} - Y_{current})^2 \right] \qquad \text{Eq. (1)}$$

A simplified distance (weight value) calculation may be used that measures $\Delta X$ and $\Delta Y$ and then sums them together:

$$\text{Weight value}' = \text{ABS}\,(X_{previous} - X_{current}) + \text{ABS}\,(Y_{previous} - Y_{current}) \qquad \text{Eq. (2)}$$

The above simplified weight value calculation, Eq. (2), creates a diamond shaped pattern for a given weight value instead of a circular pattern of the more complex weight value calculation, Eq. (1). Use of Eq. (2) may be optimized for speed of the weight value calculations in a simple processing system, distance may be calculated based upon the sum of the change of the X-distances and the change in the Y-distances, *e.g.,* Eq. (2) herein above. A better weight value may be defined as a smaller distance between sequential touch locations.

For each new touch location a weight value may be calculated for all touch locations from the previous frame. The new touch location is then associated with the previous touch location having the best weight value therebetween. If the previous touch location already has an associated touch location from a previous frame, a secondary second-best weight value for each touch location may be examined. The touch location with the lower-cost second-best weight value may then be shifted to its second best location, and the other touch location may be kept as the best touch location. This process is repeated until all touch locations have been associated with previous frame touch locations, or have been identified as "new touches" having new locations with no touch locations from the previous frame being close to the new touch location(s).

An alternative to the aforementioned weighting process may be a vector-based process utilizing a vector created from the previous two locations to create the most likely next location. This vector-based weighting process may use the same distance calculations as the aforementioned weighting process, running it from multiple points and modifying the weight values based upon from which point the measurement was taken.

By looking at the previous two locations of a touch, the next "most likely" location of that touch may be predicted. Once the extrapolated location has been determined that location may be used as the basis for a weighting value. To improve matching on the extrapolated location an "acceleration model" may be used to add weighting points along the vector to the extrapolated locations and past the extrapolated locations.. These additional points assist in detecting changes in speed of the touch movement, but may not be ideal for determining direction of the touch motion.

Once the touch locations have been established, forces thereto may be assigned to these touch locations based upon the magnitude of change of the capacitance values determined during the process of Data Acquisition 502, as more fully described hereinabove. Also the forces applied to the touch sensor 102 from the associated tracked touch points may be utilized in further determining three dimensional gesturing, *e.g.,* X-Y and Z directions.

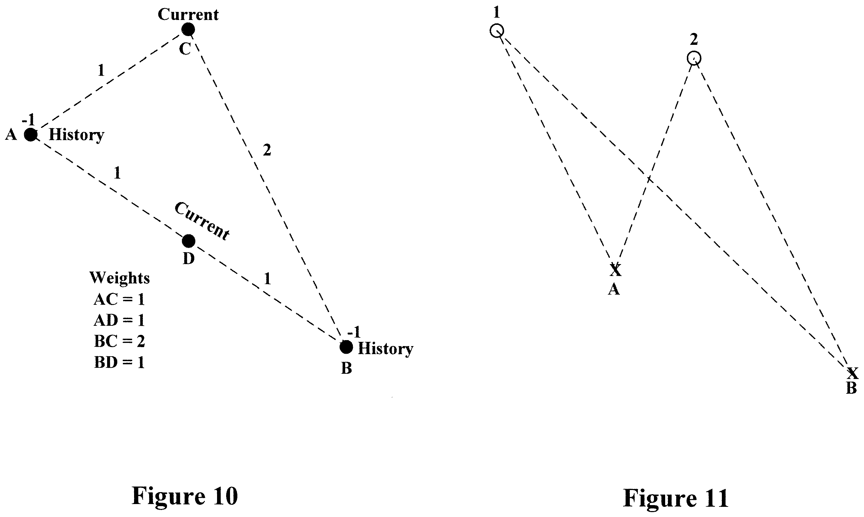

Referring to Figures 10 and 11, depicted are schematic diagrams of historic and current point locations used for a point weighting example, according to the teachings of this disclosure. Once weights have been generated, the best combination of weight values and associated touches may be generated. Certain touch scenarios may cause nearly identical weight values, in which case the second best weight values should be compared and associations appropriately shifted. Depending upon the order of operations, points A and D may be associated first. As the weight values for B are generated BD is a better match then BC. In this case look at secondary weight values. Is it less costly to shift A to be associated with C or to shift B to be associated with C?

By extending this sequence of operations, all points can have associations shifted for the best overall match, not just the best local match. Some caution may be needed to prevent infinite loops of re-weighing. This may be accomplished by limiting the number of shifts to a finite number. Referring now to Figure 11, points A and B are existing points, and points 1 and 2 are "new" points that need to be associated.

Step 1) Calculate weight values between touch locations:

> A ↔ 1 weight = 5 ((ΔX = 2) + (ΔY = 3) = 5)
> A ↔ 2 weight = 4
> B ↔ 1 weight = 10
> B ↔ 2 weight = 5

Step 2) Select the "best" pair (lowest weight) for each existing touch location:
A ↔ 2 weight = 4 and B ↔ 2 weight = 5
Step 3) If more than one existing touch location pairs with a given new touch location, then look at the second-best touch locations for each and the difference in weight values from the best to the second best pair (the "cost").

> A ↔ 1 (weight: 5) Cost = 1: (A ↔ 1 weight) - (A ↔ 2 weight 4)
> B ↔ 1 (weight: 10) Cost = 5: (B ↔ 1 weight) - (B ↔ 2 weight 5)

Step 4) Shift the pairing to the lowest cost pair thereby allowing the other touch location to maintain the original pairing.

A ↔ 1

B ↔ 2

Step 5) Repeat steps 2) through 4) until all pairing are 1:1. If there are more touch locations than existing touch locations then start tracking a new touch location. If fewer new touch locations than existing "worst match" touch locations then these worst match touch locations may be lost and no longer tracked.

### Flat Finger Identification

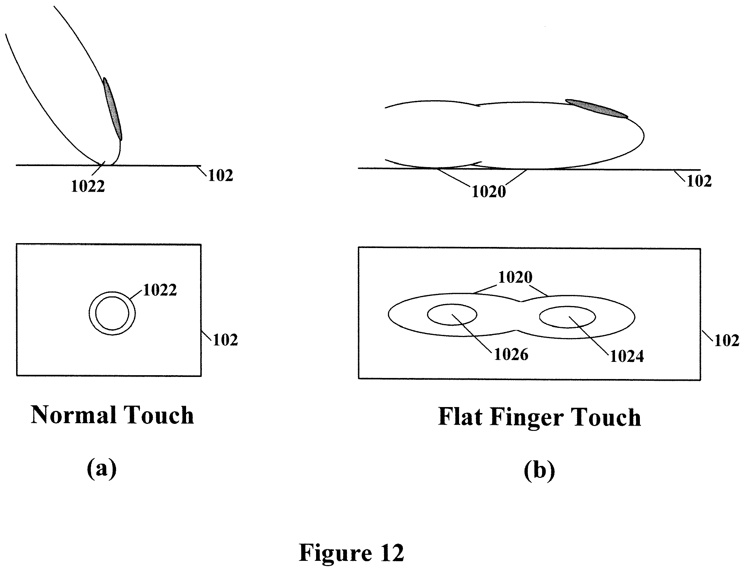

Referring to Figure 12, depicted are schematic drawings of a normal finger touch and a flat finger touch, according to the teachings of this disclosure. One challenge of identifying a touch is the "flat finger" scenario. This is when the side or flat part of a finger 1020, rather than the finger tip 1022, is placed on the touch sensor 102. Note that a flat finger 1020 may generate two or more potential touch locations 1024 and 1026. It is possible using the teaching of this disclosure to detect a flat finger 1020 by accumulating the sum of the values of all nodes nudged to each peak. If the sum of these values surpasses a threshold then it is likely caused by a flat finger touch. If a flat finger touch is detected then other touches that are near the flat finger peak(s) may be suppressed. In addition, comparing the forces associated with the two or more potential touch locations 1024 and 1026 may also be used in detecting a flat finger 1020 situation.

### Data Output

Referring back to Figure 5, Data Output 508 is the process of providing determined touch location coordinates and associated forces applied thereto in a data packet(s) to a host system for further processing.

### Touch Determination

Given an array of touch data, examine the differences between the values thereof and flag certain key scenarios as potential peaks for further examination. All touch data values below a threshold value may be ignored when determining touch locations.

### Key Scenario 1: True Peak

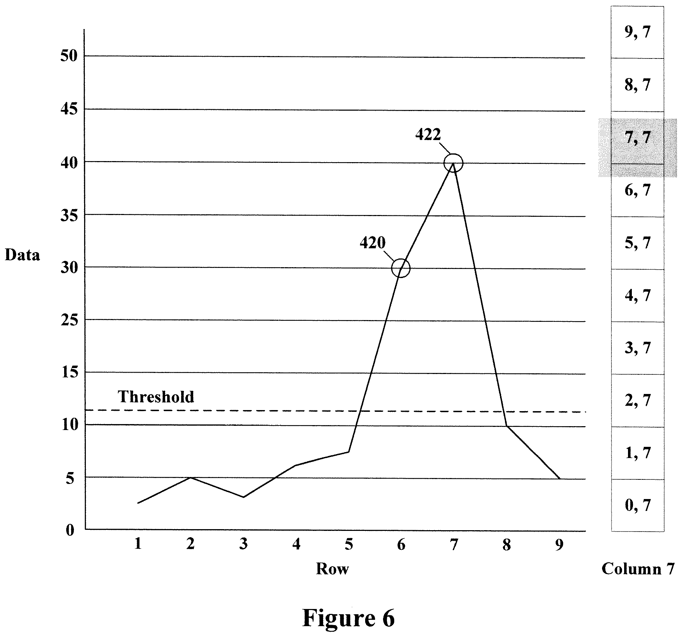

Referring to Figure 6, identify the transition from a positive to a negative slope as a potential peak. This would be the point circled in column 7 of the example data values shown in Figure 6.

### Key Scenario 2: Slope Ratio Beyond Threshold ("Fuzzy" Peak Detection)

A key threshold of slope ratios may be used to flag additional peaks. The threshold value used may be, for example but is not limited to, 2:1; so instances where there is a change of slope greater than 2:1 may be identified as potential peaks. This applies to positive and negative slopes. This would be the point circled in column 6 of the example data values shown in Figure 6.

### Why not just look at the slope signs?

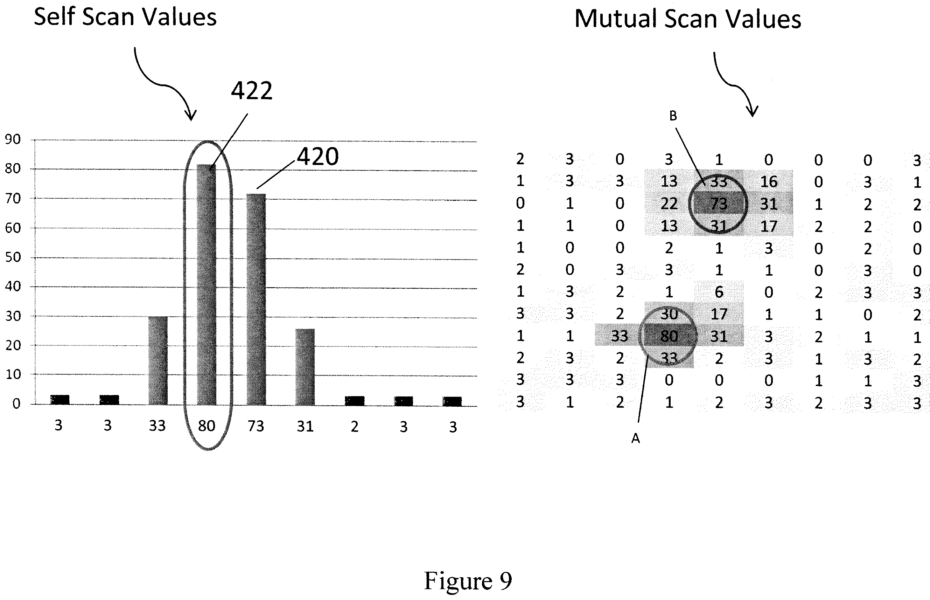

Since the self scan is only one axis of a two-axis sensor array (*e.g.,* conductive rows 105 and conductive columns 104 of touch sensor 102, Figure 1), it is possible for two touches that are off by a single "bar" (*e.g.,* column) to only show a single peak. With the example data, there could be two touches, one at 6,6 and another at 7,7 (see Figures 6 and 9). Without the additional peak detection, the touch at 6,3 may not be detected.

### Nudge Location Refinement

Once a potential touch location is identified, each adjacent touch location may be examined to determine if they have a greater value. If a greater value is present, eliminate the current potential touch location and identify the touch location of the greater value as a potential touch location. This process is repeated until a local peak has been identified.

Referring to Figure 6, depicted is a graph of single touch peak detection data, according to specific example embodiments of this disclosure. An example graph of data values for one column (*e.g.,* column 7) of the touch sensor 102 is shown wherein a maximum data value determined from the self and mutual capacitance measurements of column 7 occurs at the capacitive touch sensor 104 area located a row 7, column 7. All data values that are below a threshold value may be ignored, *e.g.,* below about 12 in the graphical representation shown in Figure 6. Therefore only data values taken at row 6 (data value = 30) and at row 7 (data value = 40) need be processed in determining the location of a touch to the touch sensor 102. Slope may be determined by subtracting a sequence of adjacent row data values in a column to produce either a positive or negative slope value. When the slope value is positive the data values are increasing, and when the slope value is negative the data values are decreasing. A true peak may be identified as a transition from a positive to a negative slope as a potential peak. A transition from a positive slope to a negative slope is indicated at data value 422 of the graph shown in Figure 6.

However another touch may have occurred at column 6 and was not directly measured in the column 7 scan, but shows up as data value 420 during the column 7 scan. Without another test besides the slope sign transition, the potential touch at column 6 may be missed. Therefore a threshold of slope ratios may further be used to flag additional potential peaks. Slope is the difference between two data values of adjacent conductive columns 104. This threshold of slope ratios may be, for example but is not limited to, 2:1 so instances where there is a change of slope greater than 2:1 may be identified as another potential peak. This may apply to both positive and negative slopes. For example, the data value 420, taken at row 6, has a left slope of 23:1 (30 - 7) and a right slope of 10:1 (40 - 30). The data value 422, taken at row 7, has a left slope of 10:1 (40 - 30) and right slope of -30:1 (10 - 40). The slope ratio for row 6 of 23:10, exceeds the example 2:1 threshold and would be labeled for further processing. All other data values are below the data value threshold and may be ignored.

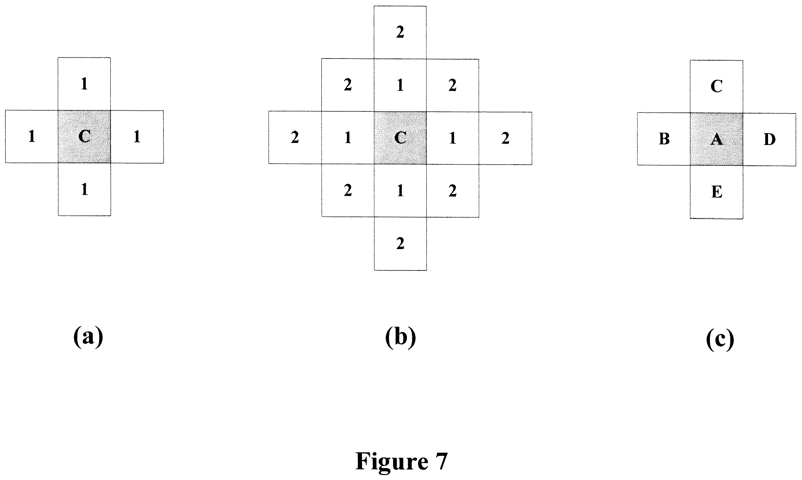

Referring to Figure 7, depicted is a schematic plan diagram of potential touch and mutual touch locations of a touch sensor, according to specific example embodiments of this disclosure. Once a potential touch location is identified, each adjacent location thereto may be examined to determine whether any one of them may have a greater data value than the current potential touch location (labeled "C" in Figure 7(a) & 7(b)). If a greater data value is found, then the current potential touch location may be eliminated and the touch location having the greater value may be identified as a potential touch location. This is referred to herein as the process of Nudge 512 and may be repeated until a data peak has been identified.

During a data acquisition scan of a column of rows, only tier one nodes (labeled "1" in Figure 7(a) and 7(b) - adjacent locations to the current potential touch location) are examined. If any of these tier one nodes has a larger data value than the data value of the current potential touch location, a new current touch location is shifted ("nudged") to that node having the highest data value and the process of Nudge 512 is repeated. If a tier one node is already associated with a different potential peak, then no further searching is necessary and the current data peak may be ignored. Tier two nodes (labeled "2" in Figure 7(a) & 7(b) - adjacent locations to the tier one nodes) are examined when there is a potential of a large area activation of the touch sensor 102.

After one conductive column 104 has been scanned for mutual capacitance values, the process of Nudge 512 may be speeded up by storing the mutual capacitance data values of that one column in a cache memory, then doing the Nudge 512 first on the tier one nodes, and then on the tier two nodes of that one column from the mutual capacitance data values stored in the cache memory. Then only after there are no further nudges to do in that one column will the process of Nudge 512 examine the tier one and tier two nodes from the mutual capacitance measurement scans of the two each adjacent columns on either side of the column having the process of Nudge 512 performed thereon.

Interpolation of the potential touch location may be performed by using the peak data value node (touch location) as well as each adjacent node thereto (*e.g.,* tier one nodes from a prior Nudge 512) to create sub-steps between each node. For example, but not limited to, 128 steps may be created between each node. Referring to Figure 7(c), node A is the potential touch location and nodes B, C, D and E are tier one nodes adjacent thereto. The interpolated X, Y location may be found using the following equations:

$$\text{Location}_x = (D_{\text{Value}} - B_{\text{Value}})/A_{\text{Value}} * 64$$

$$\text{Location}_y = (E_{\text{Value}} - C_{\text{Value}})/A_{\text{Value}} * 64$$

It is contemplated that variations of the above equations may be used based upon the ratio of values and the signs of the numerator of the division.

Referring to Figure 8, depicted is a schematic plan view diagram of a touch sensor showing a cache data window thereof, according to specific example embodiments of this disclosure. The conductive columns 104 of the touch sensor 102 may be scanned column by column for self capacitance values until all conductive columns 104 have been scanned. Each conductive column 104 indicating a potential touch from the self capacitance data may be sequentially scanned for determining mutual capacitive values thereof (touch data) and when peaks are discovered they may be processed contemporaneously with the column scan. Furthermore, touch data may be stored in a cache memory for further processing. Since the Nudge 512 looks at the first tier nodes then the second tier nodes, if necessary, not all of the touch data from all of the conductive columns 104 need be stored at one time. This allows a simple caching system using a minimum amount of random access memory (RAM). For example, storing five columns of touch data in a cache. The five columns are contiguous and a cache window may move across the columns 104 of the touch sensor 102 one column 104 at a time. It is contemplated that more or fewer than five columns of touch data may be stored in a cache memory and processed therefrom, and/or self capacitance scanning by rows instead of columns may be used instead. All descriptions herein may be equally applicable to self capacitance scanning of rows then mutual capacitance scanning by columns of those row(s) selected from the self capacitance scan data.

Whenever a Mutual Scan of a first or second tier node (capacitive sensor 104) is requested, it may be called first from the cache memory. If the requested node touch data is present in the cache memory, the cache memory returns the requested touch data of that first or second tier node. However, if the requested touch data is not present in the cache memory then the following may occur: 1) If the column of the requested touch data is in the range of the cache window then perform the mutual scan of that column and add the touch data to the cache memory, or 2) If the column of the requested touch data is not in the range of the present cache window then shift the cache window range and perform the mutual scan of the new column and add the resulting touch data from the new cache window to the cache memory.

Referring to Figure 9, depicted are a graph of self scan values and a table of mutual scan values for two touch peak detection data, according to specific example embodiments of this disclosure. Since a self scan is performed in only one axis (*e.g.,* one column), it is possible for two touches that are off by a single column to only show a single peak. For the example data values shown in Figure 9, two touches may have occurred, one at self scan data value 422 and the other indicated at self scan data value 420. Without being aware of change of slopes greater than 2:1, the potential touch represented by self scan data value 420 may have been missed. A first touch may cause data value 422 and a second touch may cause data value 420. The processes of Peak Detection 510 and Nudge 512 (Figure 5), as described hereinabove, may further define these multiple touches as described herein. Once each multiple touch has been defined a force thereof may be determined and associated its respective touch.

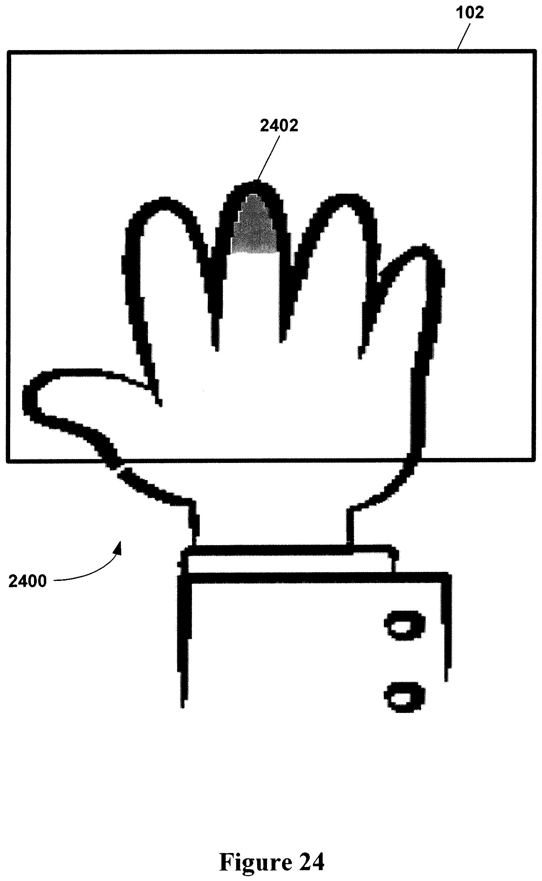

Referring to Figure 24, depicted is schematic plan view of a finger of a hand touching a surface of a touch sensor, according to a specific example embodiment of this disclosure. A hand of a user, generally represented by the numeral 2400, may hover over a face of a touch sensor 102, *e.g.,* touch screen or panel, having a plurality of locations that when at least one of the plurality of locations is touched by a finger 2402 of the hand 2400, the location and on the face of the touch sensor 102 force thereto is detected and stored for further processing as disclosed herein. For example, a light touch of the finger 2402 on the face of the touch sensor 102 may select an object (not shown) displayed by a visual display integral therewith. Upon the finger 2402 pressing a little harder at the touch location the selected object may be locked in place. Pressing even harder on the locked object and then gesturing to move the object may release the lock on the object. Another example, pressing on the object (not shown) selects the object, then pressing harder fixes the object's location. Releasing the pressure (force) on the object then pressing hard on the object again would release the object to move again.

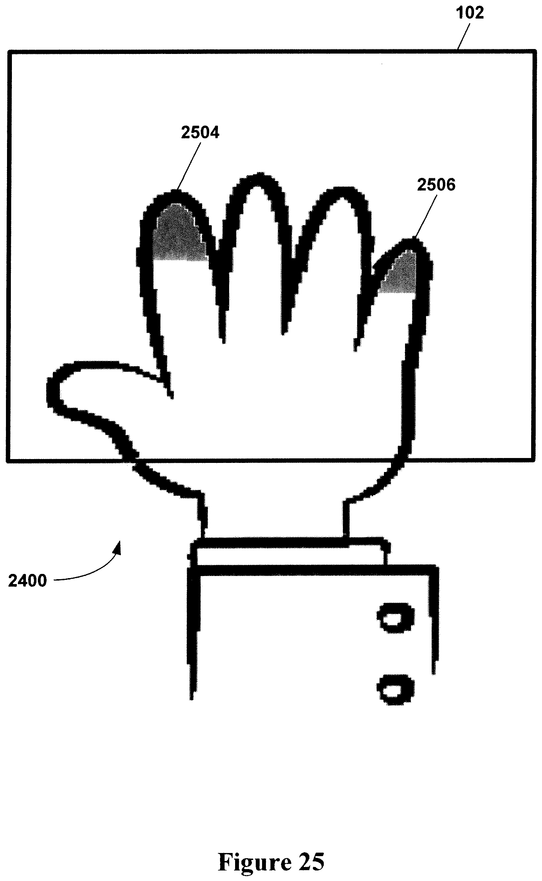

Referring to Figure 25, depicted is schematic plan view of two fingers of a hand touching a surface of a touch sensor, according to another specific example embodiment of this disclosure. A finger 2504 over a left portion of the touch sensor 102 and another finger 2506 over a right portion of the touch sensor 102 may be used to rotate an object (not shown) displayed by a visual display integral therewith. For example, when the left oriented finger 2504 presses harder than the right oriented finger 2506 the object may rotate counterclockwise about an axis parallel with the axis of the wrist/arm. When the right oriented finger 2506 presses harder than the left oriented finger 2504 the object may rotate clockwise about the axis parallel with the axis of the wrist/arm. When the wrist is rotated while the fingers 2504 and 2506 are touching the face of the touch sensor 102, the object (not shown) may rotate substantially perpendicular to the axis of the wrist/arm (substantially parallel with the face of the touch sensor 102) and in the direction of the rotation of the fingers 2504 and 2506.

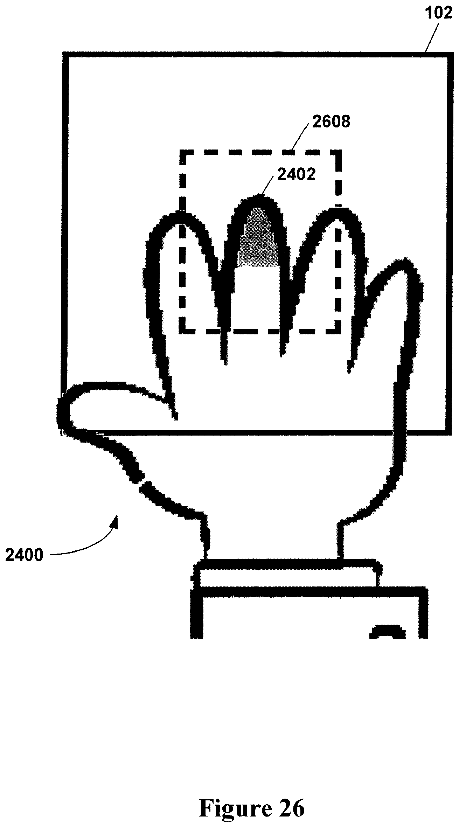

Referring to Figure 26, depicted is schematic plan view of a finger of a hand touching an object projected on a surface of a touch sensor, according to yet another specific example embodiment of this disclosure. Pressing on the face of the touch sensor 102 over an object 2608 with a finger 2402 may be used to scale the size of the object. For example, the greater the force of the press (touch) by the finger 2402 the larger in size that the object may be displayed. The object may remain at the new larger size or may vary in size in proportion to the force applied to the face of the touch sensor, *e.g.,* a harder press will result in a larger in size object and a softer press will result in a smaller in size object. The size of the object may follow the amount of force applied by the finger 2402 to the face of the touch sensor 102.

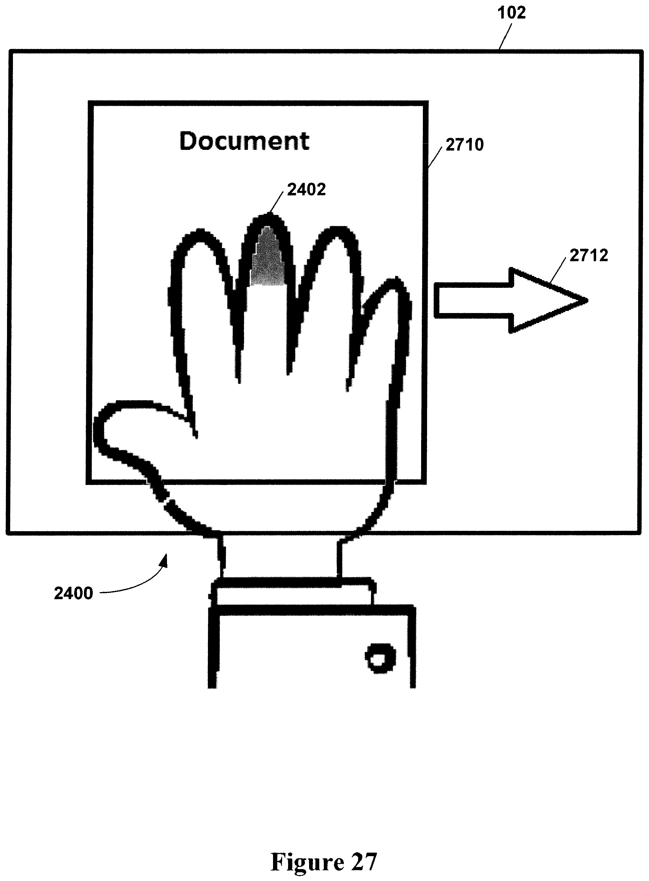

Referring to Figure 27, depicted is schematic plan view of a finger of a hand touching a document projected on a surface of a touch sensor, according to still another specific example embodiment of this disclosure. A document 2710 may displaced on a face of the touch sensor 102. A touch of sufficient force by the finger 2402 to a portion of the document 2710 may be used to flip through pages thereof. A finger 2402 movement, for example but not limited to, the right may remove currently visible page(s) of the document 2710. Pressing on a removed page near another new document (not shown) may be used to flip through the new document (not shown) and/or may allow insertion of the remove page into the new document. For example, pressing on a document 2710 flips through a stack of document pages. If the finger 2402 then moves off the document the selected page may be removed. Pressing on a single page next to a document may flip through the document and then may insert the page when it is drug over the document.

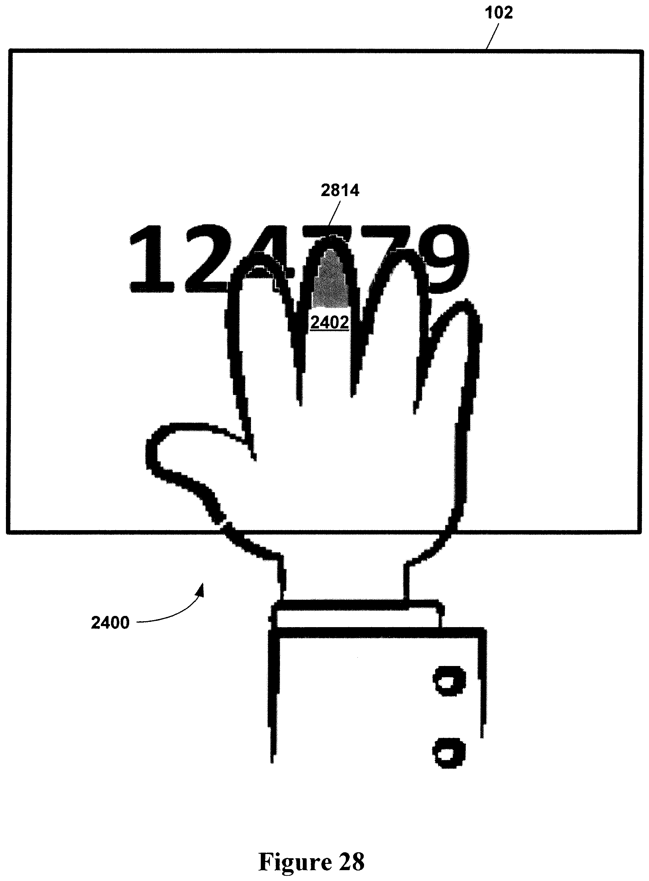

Referring to Figure 28, depicted is schematic plan view of a finger of a hand touching one digit of a number projected on a surface of a touch sensor, according to another specific example embodiment of this disclosure. At least one number or letter, *e.g.,* alpha-numeric character 2814, may be displayed on the face of the touch sensor. A finger 2402 may press on a portion of the character 2814 wherein the amount of force by the finger 2402 may cause the character 2814 to increase or decrease alpha-numerically in value, accordingly. When the character 2814 is a desired value then the finger 2402 may slide off, *e.g.,* up, down or sideways, to leave editing of the character 2814. An increase in the alpha-numeric value may be controlled by pressing the finger 2402 on an upper portion of the character 2814, and a decrease in the alpha-numeric value may be controlled by pressing the finger 2402 on a lower portion of the character 2814. The speed of increase or decrease of the alpha-numeric value may be proportional to the amount of force applied by the finger 2402 to surface of the touch sensor 102. More than one finger may be used to contemporaneously increase and or decrease more than one alpha-numeric character. For example, a finger 2402 may be pressed on a single digit 2814 of a number (124779 shown), whereby the single digit 2814 sequentially flips through numerical values, *e.g.,* 0-9. When a desired numerical value is displaced, the finger 2402 may be dragged off the digit to leave the selected numerical value.

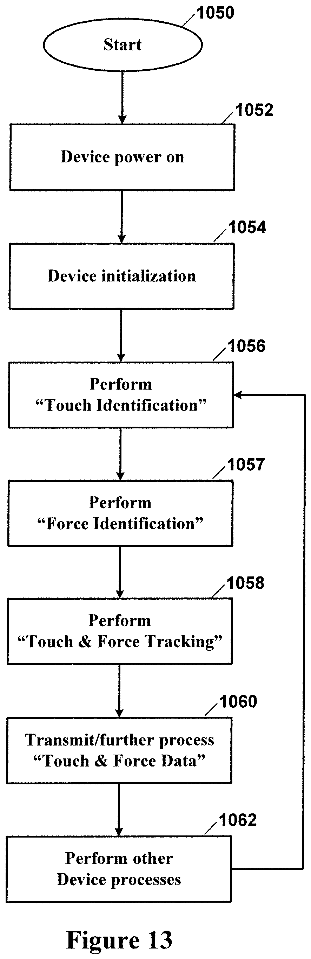

Referring to Figures 13 to 23, depicted are schematic process flow diagrams for touch decoding and force determination of the decoded touch(es), according to specific example embodiments of this disclosure. Figure 13 shows a general overview of possible processes for multi-touch decoding and force determination for a touch sensor 102 enabled device. It is contemplated that more, fewer and/or some different processes may be utilized with a touch sensor 102 enabled device. In step 1050 a device is started, actuated, *etc.,* when in step 1052 power is applied to the device. In step 1054 the device may be initialized, and thereafter in step 1056 the process of Touch Identification 504 may begin. Once the process of Touch Identification 504 in step 1056 has determined the touch locations, step 1057 determines the force applied at each of those touch locations. In step 1058 touch and force tracking may be performed on those touches identified in step 1056. In step 1060 the touch and force data may be further processed if necessary, otherwise it may be transmitted to the processing and control logic of the device for display and/or control of the device's intended purpose(s) in step 1062.

In the descriptions of the following process steps references to "top" or "north" channel or node will mean the channel or node above another channel or node, "bottom" or "south" channel or node will mean the channel or node below another channel or node, "left" or "west" channel or node will mean the channel or node to the left of another channel or node, and "right" or "east" channel or node will mean the channel or node to the right of another channel or node.

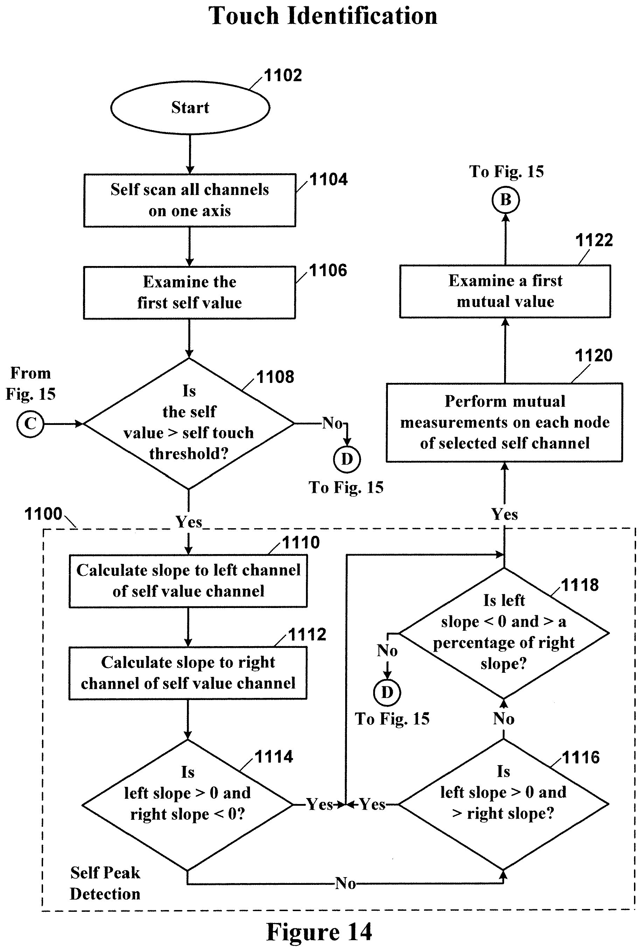

Referring to Figure 14, a flow diagram of a process of Touch Identification 504 is shown and described hereinafter. In step 1102 the process of Touch Identification 504 (Figure 5) begins. In step 1104 a self scan of all channels on one axis may be performed, *e.g.,* either all columns or all rows. In step 1106 the first self scan value may be examined. In step 1108 the (first or subsequent) self scan value may be compared to a self touch threshold value.

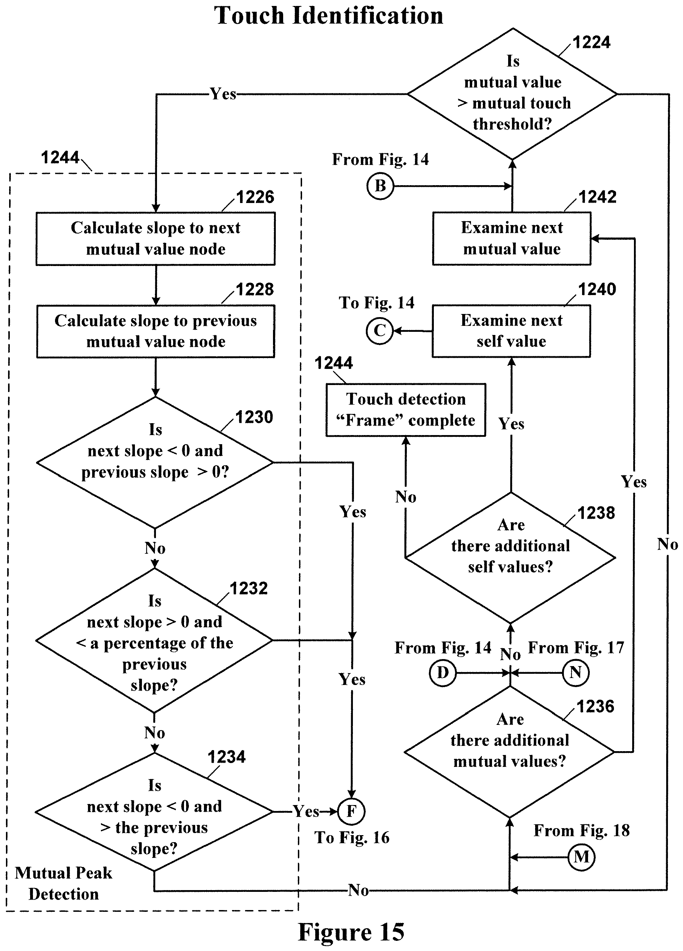

A self peak detection process 1100 may comprise steps 1110 to 1118, and is part of the overall process of Peak Detection 510 (Figure 5). If the self scan value is less than the self touch threshold value as determined in step 1108, then step 1238 (Figure 15) may determine whether there are any additional self scan values to be examined. However, if the self scan value is equal to or greater than the self touch threshold value as determined in step 1108, then step 1110 may calculate a left slope between the self scan value and a self scan value of the channel to the left of the present channel. Then step 1112 may calculate a right slope between the self scan value and a self scan value of the channel to the right of the present channel.

Step 1114 determines whether the left slope may be greater than zero (positive slope) and the right slope may be less than zero (negative slope), identifying a peak. If a yes result in step 1114, then step 1120 may perform mutual scan measurements on each node of the channel selected from the self scan data. If a no result in step 1114, then step 1116 determines whether the left slope may be greater than zero (positive slope) and greater than the right slope may be, for example but is not limited to, two times (twice) greater than the right slope. If a yes result in step 1116, then in step 1120 mutual scan measurements may be performed on each node of the selected self scan channel. If a no result in step 1116, then step 1118 determines whether the left slope may be, for example but is not limited to, less than zero (negative slope) and greater than a percentage of the right slope, *e.g.,* fifty (50) percent. If a yes result in step 1116, then step 1120 may perform mutual scan measurements on each node of the channel selected from the self scan data. If a no result in step 1116, then step 1238 (Figure 15) may determine whether there are any additional columns to be examined based upon the self scan values thereof. Step 1122 may examine a first mutual scan value.

Referring to Figure 15, a mutual peak detection process 1244 may comprise steps 1226 to 1234, and is part of the overall Peak Detection process 510 (Figure 5). Step 1224 may compare the (first or subsequent) mutual scan value to a mutual touch threshold value, wherein if the mutual scan value is less than the mutual touch threshold value then step 1236 may determine whether there are any additional mutual scan values to be examined. However, if the mutual scan value is equal to or greater than the mutual touch threshold value then step 1226 may calculate a slope to the next mutual scan value node, then step 1228 may calculate a slope to the previous mutual scan value node.

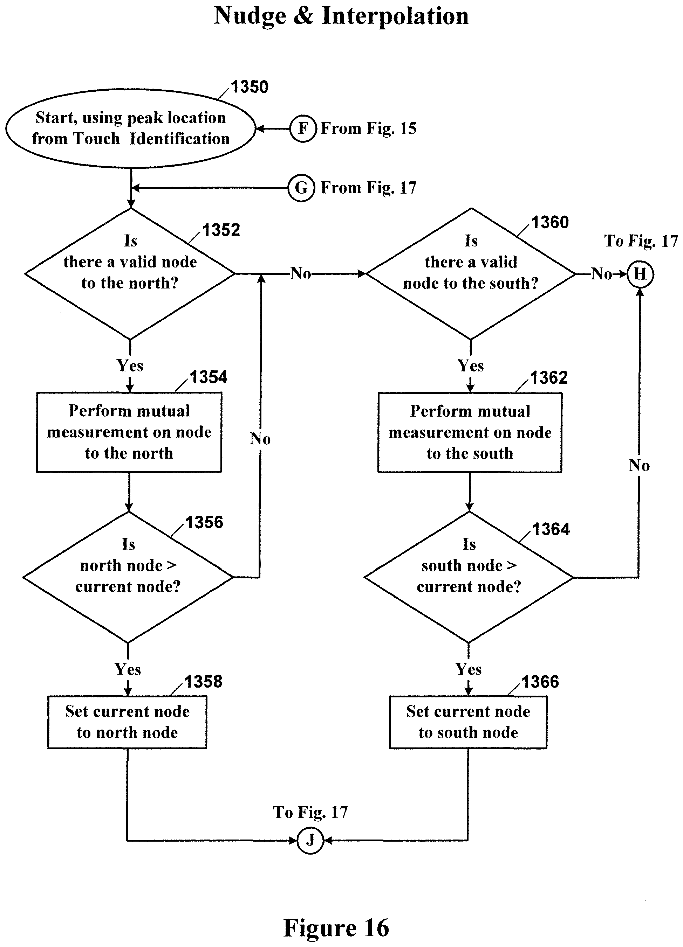

Step 1230 determines whether the next slope may be less than zero (negative slope) and the previous slope may be greater than zero (positive slope). If a yes result in step 1230, then step 1350 (Figure 16) may start the process of Nudge 512 and/or the process of Interpolation 514 (Figure 5). If a no result in step 1230, then step 1232 determines whether the next slope may be, for example but is not limited to, greater than zero (positive slope) and less than a percentage of the previous slope. If a yes result in step 1232, then step 1350 (Figure 16) may start the process of Nudge 512 and/or the process of Interpolation 514 (Figure 5). If a no result in step 1232, then step 1234 determines whether the next slope may be, for example but is not limited to, less than zero (negative slope) and greater than the previous slope. If a yes result in step 1234, then step 1350 (Figure 13) may start the process of Nudge 512 and/or the process of Interpolation 514 (Figure 5). If a no result in step 1234, then step 1236 determines whether there may be any additional mutual values to be examined. If a yes result in step 1236, then step 1242 may examine a next mutual value. If a no result in step 1236, then step 1238 determines whether there may be any additional self scan values to be examined. If a yes result in step 1238, then step 1240 examines a next self scan value that may be returned to step 1108 (Figure 14) for further processing thereof. If a no result in step 1238, then in step 1244 a touch detection frame may be complete.

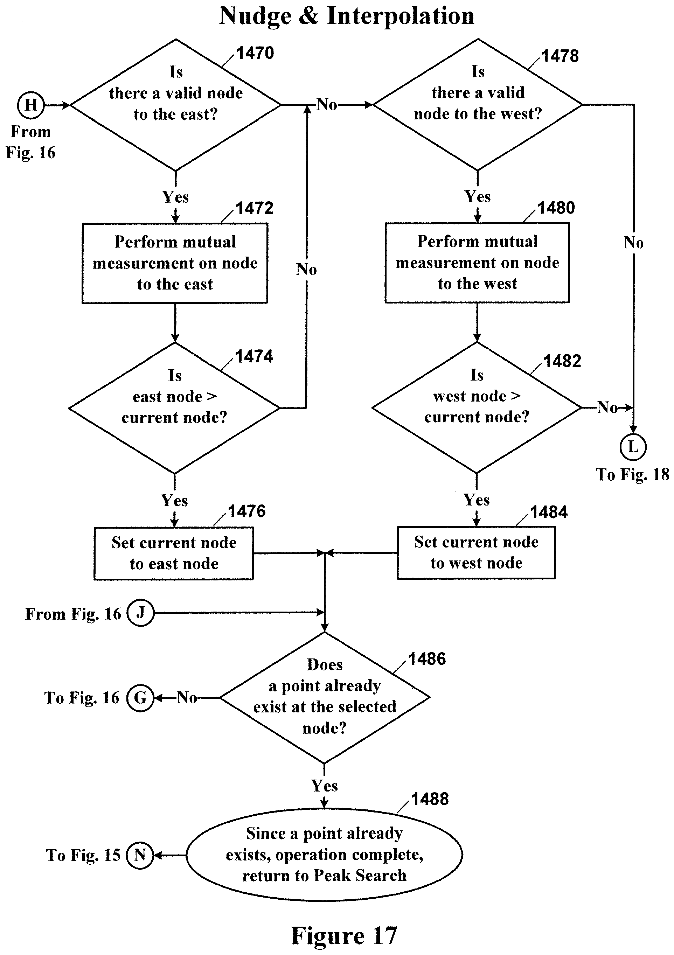

Referring to Figures 16-18, flow diagrams of processes for Nudge 512 and Interpolation 514 (Figure 5) are shown and described hereinafter. Step 1350 may start the process of Nudge 512 and/or the process of Interpolation 514 by using a peak location from the process of Touch Identification 504 (Figure 5) and may comprise the following process steps: Step 1352 determines whether there may be a valid node to the north. If a no result in step 1352, then continue to step 1360. If a yes result in step 1352, then step 1354 may make a mutual scan measurement of the node to the north. Step 1356 determines whether the mutual scan data of the north node may be greater than the current node. If a no result in step 1356, then continue to step 1360. If a yes result in step 1356, then in step 1358 the north node may become the current node, and then continue to step 1486 (Figure 17).

Step 1360 determines whether there may be a valid node to the south. If a no result in step 1360, then continue to step 1470 (Figure 17). If a yes result in step 1360, then step 1362 may make a mutual scan measurement of the node to the south. Step 1364 determines whether the mutual scan data of the south node may be greater than the current node. If a no result in step 1364, then continue to step 1470 (Figure 17). If a yes result in step 1364, then in step 1366 the south node may become the current node, and then continue to step 1486 (Figure 17).

Referring to Figure 17, step 1470 determines whether there may be a valid node to the east. If a no result in step 1470, then continue to step 1478. If a yes result in step 1470, then step 1472 may make a mutual scan measurement of the node to the east. Step 1474 determines whether the mutual scan data of the east node may be greater than the current node. If a no result in step 1474, then continue to step 1478. If a yes result in step 1474, then in step 1476 the east node may become the current node, and then continue to step 1486.

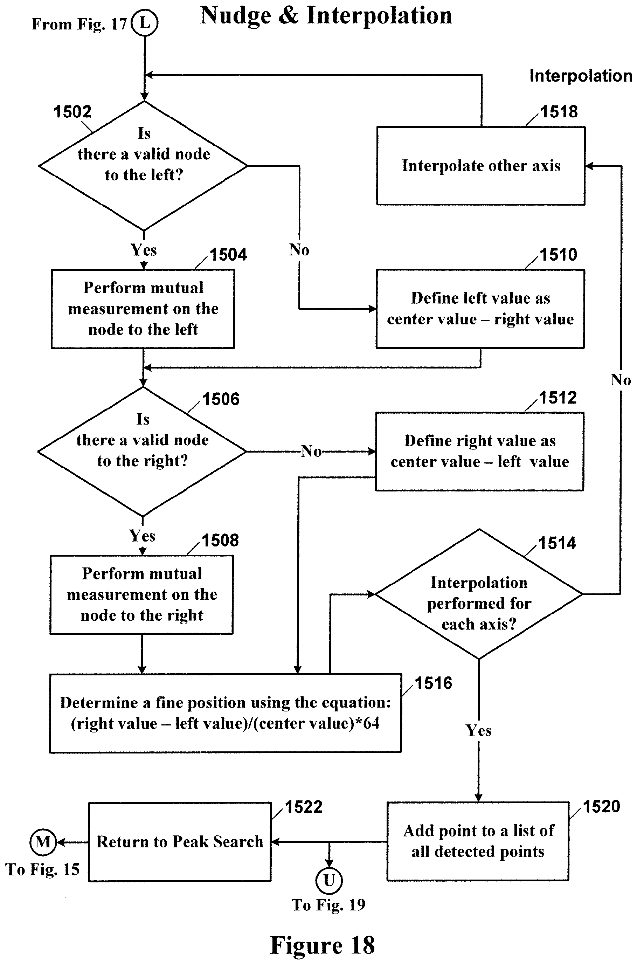

Step 1478 determines whether there may be a valid node to the west. If a no result in step 1478, then continue to step 1502 (Figure 18). If a yes result in step 1478, then step 1480 may make a mutual measurement of the node to the west. Step 1482 determines whether the mutual scan data of the west node may be greater than the current node. If a no result in step 1482, then continue to step 1502 (Figure 18). If a yes result in step 1482, then in step 1484 the west node may become the current node. Step 1486 determines whether a touch point may already exist at the selected node. If a no result in step 1486, then continue to step 1352 (Figure 16). If a yes result in step 1486, then step 1488 may eliminate the current peak, and then continue to step 1236 (Figure 15).

Referring to Figure 18, a flow diagram of a process of Interpolation 514 may comprise steps 1502 to 1518. Step 1502 determines whether there may be a valid node to the left. If a no result in step 1502, then continue to step 1510 wherein the left node value may be defined as a center value minus a right value then continue to step 1506. If a yes result in step 1502, then step 1504 may perform a mutual scan measurement on the node to the left. Then step 1506 determines whether there may be a valid node to the right. If a no result in step 1506, then continue to step 1512 wherein the right node value may be defined as a center value minus a left value then continue to step 1516. If a yes result in step 1506, then step 1508 may perform a mutual scan measurement on the node to the right. Step 1516 may determine a fine position by subtracting the left value from the right value, dividing the difference thereof by the center value, and then multiplying the result by, for example but is not limited to, the number 64. It is contemplated that many ways of determining valid peaks and nodes may be used as one having ordinary skill in the art of touch detection and tracking could readily implement by having knowledge based upon the teachings of this disclosure

After step 1516 has completed the aforementioned calculations, step 1514 determines whether an Interpolation 514 may have been performed for each axis. If a no result in step 1514, then step 1518 may interpolate another axis, thereafter steps 1502 to 1516 may be repeated, with "above" replacing "left" and "below" replacing "right" in each step. If a yes result in step 1514, then step 1520 may add this touch point to a list of all detected touch points. Then step 1522 may return to step 1236 (figure 15) for any additional mutual scan values to be examined.

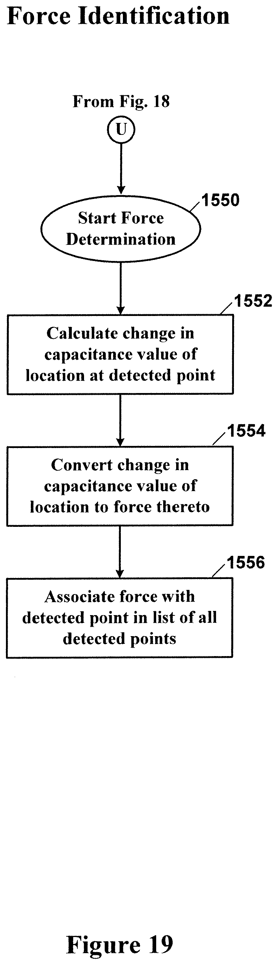

Referring to Figure 19, a flow diagram of a process of Force Identification 505 is shown and described hereinafter.

After a new touch point is added in step 1520 (Figure 18), step 1550 starts the process of determining the force applied to the touch sensor 102 at that touch point. Untouched mutual capacitances of each point on the touch sensor 102 may be stored in a memory of the digital processor 106 after a "no touch" calibration scan of all points of the touch sensor 102 is performed. When a force is applied to a touch location, the value of the mutual capacitance of that touch location will increase. In step 1552 that mutual capacitance change may be determined, and in step 1554 the mutual capacitance change may be converted into a force value. Once this force value is determined, in step 1556 the force value may then be associated with the new touch point and stored in the list of all detected touches.

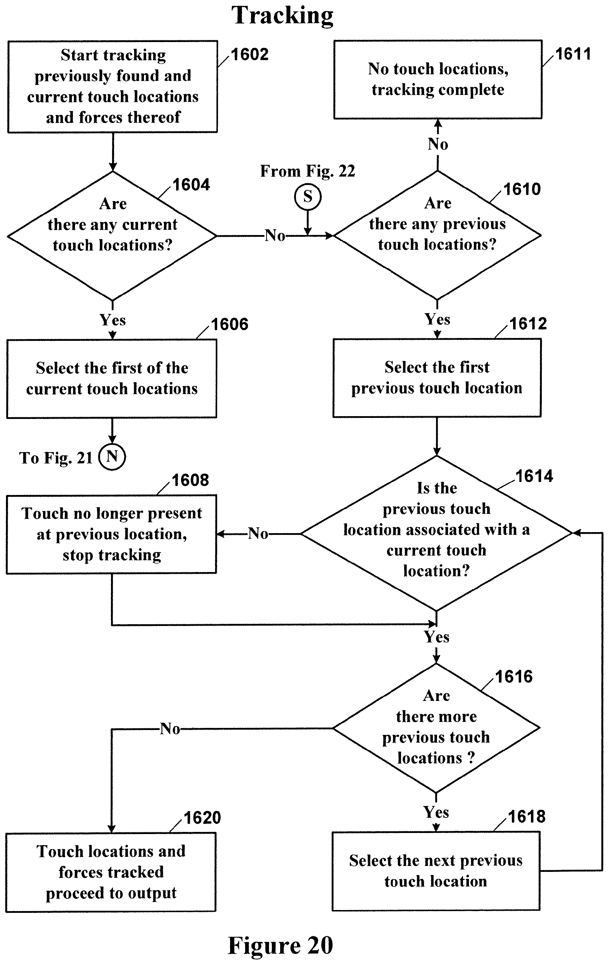

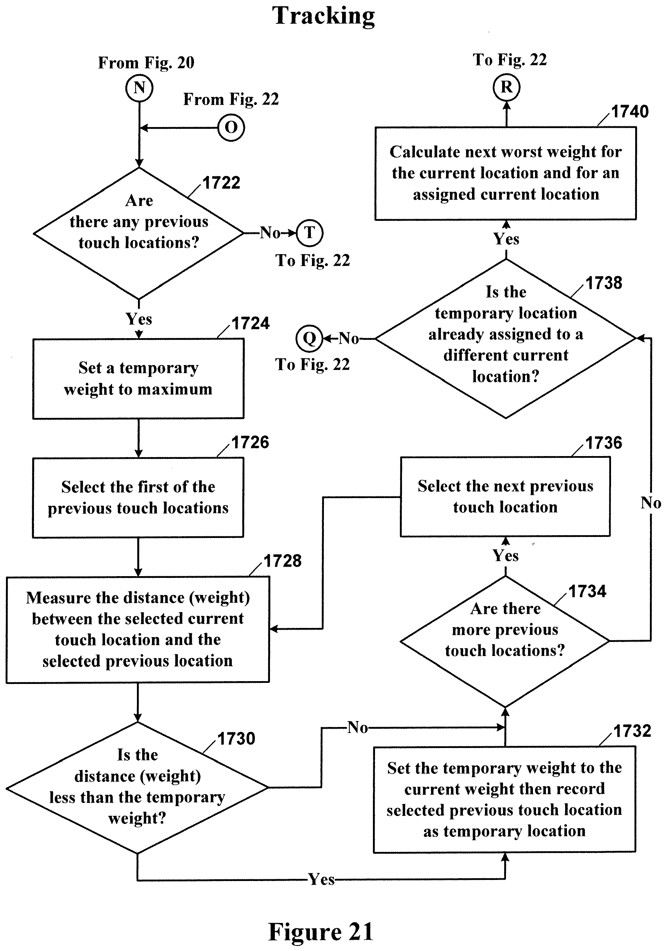

Referring to Figures 20, 21 and 22, flow diagrams of a process of Touch and Force Tracking 506 are shown and described hereinafter. In step 1602 the process of Touch and Force Tracking 506 may start by using the previously found and current touch locations. Step 1604 determines whether there may be any current touch locations. If a yes result in step 1604, then step 1606 may select the first of the current touch locations, and thereafter may continue to step 1722 (Figure 21). If a no result in step 1604, then step 1610 determines whether there may be any previous touch location(s). If a yes result in step 1610, then step 1612 may select the first previous touch location. If a no result in step 1610, then at step 1611 tracking is complete.

Step 1614 determines whether the previous touch location may be associated with a current touch location. If a no result in step 1614, then step 1608 may assert an output of "touch no longer present at previous touch location, stop tracking," and then return to step 1616. If a yes result in step 1614, then step 1616 determines whether there may be any more previous touch locations. If a no result in step 1616, then at step 1620 tracking touch locations is complete and the touch location data may be transmitted as Data Output 508 (Figure 5) for further processing by the microcontroller 112 (Figure 1). If a yes result in step 1616, then step 1618 may select the next previous touch location, and thereafter return to step 1614.

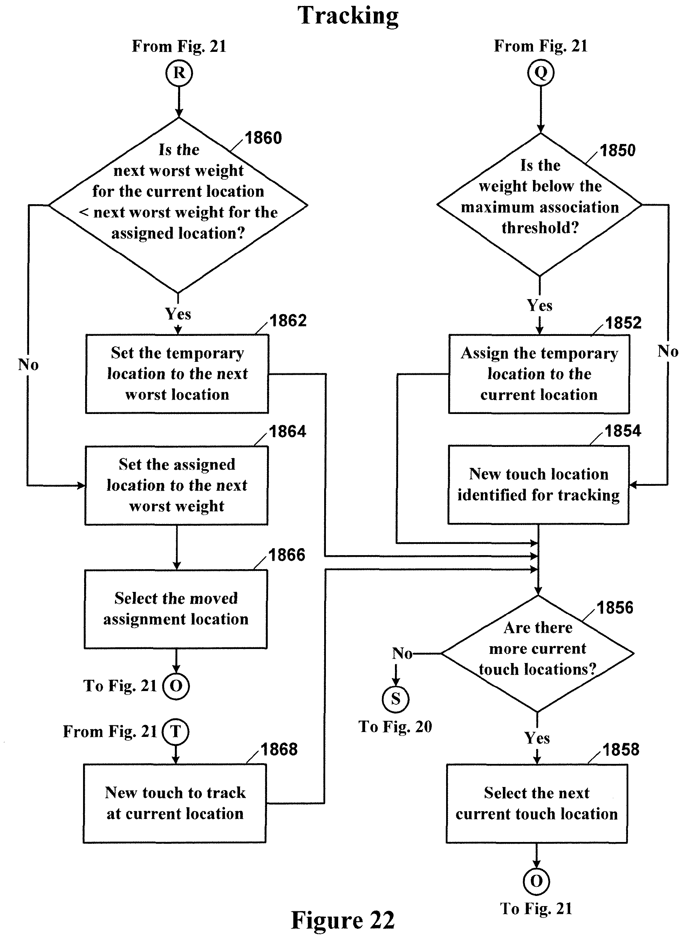

Referring to Figure 21, step 1722 determines whether there may be any previous touch locations. If a no result in step 1722, then continue to step 1868 (Figure 22) wherein a "New Touch to track is identified" at current location, and thereafter continue to step 1856 (Figure 22). If a yes result in step 1722, then step 1724 may set a temporary weight value to a maximum weight value. Step 1726 may select the first of the previous touch locations. Then step 1728 may measure a distance between the selected current touch location and the selected previous touch location to determine a current distance (weight value) therebetween. Step 1730 determines whether the current weight value may be less than the temporary weight value. If a yes result in step 1730, then step 1732 may set the temporary weight value to the current weight value and thereafter may record the selected previous touch location as a temporary location and continue to step 1734. If a no result in step 1730, then step 1734 determines whether there may be more previous touch locations. If a yes result in step 1734, then step 1736 may select the next previous touch location, and thereafter return to step 1728. If a no result in step 1734, then step 1738 determines whether the temporary location may have already been assigned to a different current location. If a yes result in step 1738, then step 1740 may calculate a next worst weight value for the current location and for an assigned current location, and thereafter continue to step 1860 (Figure 22). If a no result in step 1738, then continue to step 1850 (Figure 22).

Referring to Figure 22, step 1850 determines whether the weight value may be below a maximum association threshold. If a no result in step 1850, then step 1854 may identify a new touch location for tracking. If a yes result in step 1850, then step 1852 may assign a new temporary location to the current location and then continue to step 1856. Step 1860 determines whether the next worst weight value for the current location may be less than the next worst weight value for the assigned location. If a yes result in step 1860, then step 1862 may set the temporary location to the next worst location and thereafter continue to step 1856. If a no result in step 1860, then step 1864 may set the assigned location to the next worst weight value. Step 1866 may select a moved assignment location and thereafter return to step 1722 (Figure 21). Step 1856 determines whether there may be more current touch locations. If a yes result in step 1856, then step 1858 may select the next current touch location and thereafter return to step 1722 (Figure 21).

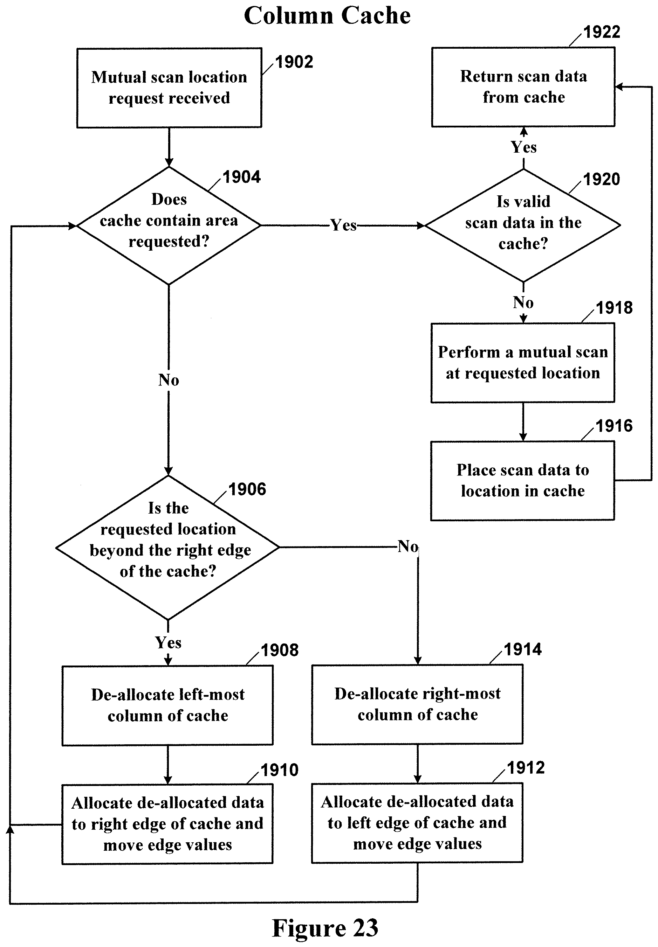

Referring to Figure 23, depicted is a process flow diagram for a column cache, according to specific example embodiments of this disclosure. Step 1902 may receive a mutual scan location request. Step 1904 determines whether the mutual scan area location requested may be stored in the cache memory. If a yes result in step 1904, then step 1920 determines whether the mutual scan data stored in the cache memory may be valid. If a yes result in step 1920, then step 1922 may return mutual scan data to the cache memory. If a no result in step 1920, then step 1918 may perform a mutual scan at the requested location, wherein step 1916 may write the mutual scan data to a location in the cache memory and then return back to step 1922.

If a no result in step 1904, then step 1906 determines whether the requested touch location may be beyond the right edge of the cache. If a yes result in step 1906, then step 1908 may de-allocate the left-most column of mutual scan data from the cache memory. In step 1910 the de-allocated mutual scan data may be allocated to the right edge of the cache memory so as to move the edge values thereof, and thereafter return to step 1904. If a no result in step 1906, then step 1914 may de-allocate the right-most column of data from the cache memory. In step 1912 the de-allocated mutual scan data may be allocated to the left edge of the cache memory so as to move the edge values thereof, and thereafter return to step 1904.

While embodiments of this disclosure have been depicted, described, and are defined by reference to example embodiments of the disclosure, such references do not imply a limitation on the disclosure, and no such limitation is to be inferred. The subject matter disclosed is capable of considerable modification, alteration, and equivalents in form and function, as will occur to those ordinarily skilled in the pertinent art and having the benefit of this disclosure. The depicted and described embodiments of this disclosure are examples only.

**Claims**

1. A method for decoding multiple touches and forces thereof on a touch sensing surface, wherein said touch sensing surface comprises a plurality of deformable spacers (334) arranged between a flexible electrically conductive cover (103) and a first plurality of electrodes (104), wherein the plurality of deformable spacers (334) maintains a distance between the flexible electrically conductive cover (103) and the first plurality of electrodes (104), said method comprising the steps of:

   scanning a plurality of channels (104) aligned on an axis for determining self capacitance values of each of the plurality of channels (104), wherein each channel (104) is formed by one of the first plurality of electrodes (104);
   comparing the self capacitance values to determine which one of the channels (104) has a local maximum self capacitance value;
   scanning a plurality of nodes (120) of at least one channel (104) having a determined local maximum self capacitance value for determining mutual values of the nodes (120);
   comparing the mutual values to determine which one of the nodes (120) has the largest mutual capacitance value, wherein the node (120) having the largest mutual capacitance value on the local maximum self capacitance value channel is a potential touch location; and
   determining a force at the potential touch location from a change in the mutual capacitance values of the node (120) at the potential touch location during no touch and during a touch thereto.

2. The method according to claim 1, further comprising the steps of:

   determining if at least one of the self values is greater than a self touch threshold, wherein
   if yes then continue to the step of scanning a plurality of nodes of the at least one channel having the largest self value, and
   if no then end a touch detection frame as completed.

3. The method according to claim 1, further comprising the step of:
   determining left and right slope values for the at least one self value, wherein:

   the left slope value is equal to the at least one self value minus a self value of a channel to the left of the at least one channel, and
   the right slope value is equal to the at least one self value minus a self value of a channel to the right of the at least one channel.

4. The method according to claim 3, further comprising the steps of:

   determining if the left slope value is greater than zero (0) and the right slope value is less than zero (0), wherein if yes then return to the step of scanning the plurality of nodes of the at least one channel, and if no then continue to next step;
   determining if the left slope value is greater than zero (0) and greater than the right slope value, wherein if yes then return to the step of scanning the plurality of nodes of the at least one channel, and if no then continue to next step;
   determining if the left slope value is less than zero (0) and greater than a percentage of the right slope value, wherein if yes then return to the step of scanning the plurality of nodes of the at least one channel, and if no then continue to next step;
   determining if there is another self value, wherein if yes then return to the step of determining if at least one of the self values is greater than the self touch threshold value using the another self value, and if no then end a touch detection frame as completed.

5. The method according to claim 2, further comprising the steps of:

determining if at least one of the mutual values is greater than a mutual touch threshold, wherein

if yes then continue to the step of scanning a plurality of nodes (120) of the at least one channel (104) having the largest self value, and
if no then end the touch detection frame as completed.

6. The method according to claim 5, further comprising the steps of:

determining a next slope value, wherein the next slope value is equal to a current mutual value minus a next mutual value of a next node (120); and
determining a previous slope value, wherein the previous slope value is equal to the current mutual value minus a previous mutual value of a previous node (120).

7. The method according to claim 6, further comprising the steps of:

determining if the next slope value is less than zero (0) and the previous slope value is greater than zero (0), wherein

if yes then begin the step of validating the node (120), and
if no then continue to next step;

determining if the next slope value is greater than zero (0) and less than a percentage of the previous slope value, wherein

if yes then begin the step of validating the node (120), and
if no then continue to next step;

determining if the next slope value is less than zero (0) and greater than the previous slope value, wherein

if yes then begin the step of validating the node (120), and
if no then continue to next step;

determining if there is another mutual value, wherein

if yes then return to the step of determining if at least one of the mutual values is greater than the mutual touch threshold, and
if no then continue to the next step; and

determining if there is another self value, wherein

if yes then examine another self value and return to the step of determining if at least one of the self values is greater than a self touch threshold, and
if no then end the touch detection frame as completed.

8. The method according to claim 7, wherein the nodes are arranged in a matrix extending from east to west on a X-axis and from north to south on a Y-axis and wherein the step of validating the node comprises the steps of:

identifying the node (120) having a local maximum mutual value as a current node;
determining if there is a valid node north of the current node, wherein

if no then continue to the step of determining if there is a valid node south of the current node, and
if yes then perform a mutual measurement on the north node and continue to the next step;

determining if the north node is greater than the current node,

if yes then make the north node the current node and continue to the step of determining whether a touch point already exists at this node, and
if no then continue to the next step;

determining if there is a valid node south of the current node, wherein

if no then continue to the step of determining if there is a valid node east of the current node, and
if yes then perform a mutual measurement on the south node and continue to the next step;

determining if the south node is greater than the current node, wherein

if yes then make the south node the current node and continue to the step of determining whether a touch point already exists at this node, and
if no then continue to the next step;

determining if there is a valid node east of the current node, wherein

if no then continue to the step of determining if there is a valid node west of the current node, and
if yes then perform a mutual measurement on the east node and continue to the next step;

determining if the east node is greater than the current node,

if yes then make the east node the current node and continue to the step of determining whether a touch point already exists at this node, and
if no then continue to the next step;

determining if there is a valid node west of the current node, wherein

if no then continue to the step of determining if there is a valid node left of the current node, and
if yes then perform a mutual measurement on the west node and continue to the next step;

determining if the west node is greater than the current node,

if yes then make the west node the current node and continue to the step of determining whether a touch point already exists at this node, and
if no then continue to the next step;

determining if there is a valid node left of the current node, wherein

if no then define a left mutual value as a center mutual value minus a right mutual value and continue to the step of determining a fine position for the node, and
if yes then perform a mutual measurement on the left node and continue to the next step;

determining if there is a valid node right of the current node, wherein

if no then define the mutual value as the center mutual value minus the left mutual value and continue to the step of determining the fine position for the node, and
if yes then perform a mutual measurement on the right node and continue to the next step;

defining a fine position of the node by subtracting the left value from the right value, dividing this difference by the center value and multiplying the result thereof by 64 and continue to the next step; and
determining whether interpolation was performed for each axis, wherein

if yes, then add another touch point to a list of all detected touch points and return to the step of determining if there are additional mutual values, and
if no, then interpolate another axis by using left and right nodes of the other axis for starting again at the step of determining if there is a valid node left of the current node.

9. A system for determining gesturing motions and forces thereof, said system comprising:

a touch sensing surface (102) having a visual display and comprising said plurality of deformable spacers (334) between the flexible electrically conductive cover (103) and the first plurality of electrodes (104), wherein the plurality of deformable spacers (334) maintains a distance between the flexible electrically conductive cover (103) and the first plurality of electrodes (104);

wherein the first plurality of electrodes (104) is arranged in a parallel orientation having a first axis, wherein each of the first plurality of electrodes (104) forms one of said channels;

a second plurality of electrodes (105) arranged in a parallel orientation having a second axis substantially perpendicular to the first axis, the first plurality of electrodes (104) are located over the second plurality of electrodes (105) and form a plurality of nodes comprising overlapping intersections of the first and second plurality of electrodes, wherein each of the plurality of nodes comprises a mutual capacitance;

a flexible electrically conductive cover (103) over the first plurality of electrodes (104), wherein a face of the flexible electrically conductive cover (103) forms the touch sensing surface;

a digital processor and memory (106), wherein digital outputs of the digital processor (106) are coupled to the first and second plurality of electrodes (104, 105);

an analog front end (110) coupled to the first and second plurality of electrodes (104, 105);

an analog-to-digital converter (ADC) (108) having at least one digital output coupled to the digital processor (106);

wherein the digital processor (106) is configured to perform the steps according to the method of one of the preceding claims.

10. The system according to claim 9, wherein the digital processor, memory, analog front end and ADC are provided by a digital device (112).

11. The system according to claim 10, wherein the digital device (112) comprises a microcontroller.

12. The system according to one of the preceding claims 9-11, wherein the flexible electrically conductive cover (103) comprises a flexible metal substrate.

13. The system according to one of the preceding claims 9-11, wherein the flexible electrically conductive cover (103) comprises a flexible non-metal substrate and an electrically conductive coating on a surface thereof.

14. The system according to one of the preceding claims 9-11, wherein the flexible electrically conductive (103) cover comprises a substantially light transmissive flexible substrate and a coating of Indium Tin Oxide (ITO) on a surface of the flexible substrate.

15. The system according to one of the preceding claims 9-11, wherein the flexible electrically conductive cover (103) comprises a substantially light transmissive flexible substrate and a coating of Antimony Tin Oxide (ATO) on a surface of the flexible substrate (103).

**Patentansprüche**

1. Verfahren zum Decodieren mehrfacher Berührungen und deren Kräfte auf einer berührungsempfindlichen Oberfläche, wobei die berührungsempfindliche Oberfläche mehrere verformbare Abstandselemente (334) umfasst, die zwischen einer biegsamen, elektrisch leitenden Abdeckung (103) und einer ersten Vielzahl von Elektroden (104) angeordnet sind, wobei die mehreren verformbaren Abstandselemente (334) einen Abstand zwischen der biegsamen, elektrisch leitenden Abdeckung (103) und der ersten Vielzahl von Elektroden (104) aufrechterhält, wobei das Verfahren die folgenden Schritte umfasst:

Abtasten mehrerer Kanäle (104), die auf einer Achse ausgerichtet sind, um Eigenkapazitätswerte von jedem der mehreren Kanäle (104) festzustellen, wobei jeder Kanal (104) durch eine der ersten Vielzahl von Elektroden (104) gebildet ist;

Vergleichen der Eigenkapazitätswerte, um festzustellen, welcher der Kanäle (104) einen lokalen maximalen Eigenkapazitätswert aufweist;

Abtasten mehrerer Knoten (120) des wenigstens einen Kanals (104), der einen festgestellten lokalen maximalen Eigenkapazitätswert aufweist, um Vergleichswerte der Knoten (120) festzustellen;

Vergleichen der Vergleichswerte, um festzustellen, welcher der Knoten (120) den größten Vergleichskapazitätswert aufweist, wobei der Knoten (120), der den größten Vergleichskapazitätswert auf dem Kanal mit dem lokalen maximalen Eigenkapazitätswert aufweist, eine potentielle Berührungsstelle ist; und

Feststellen einer Kraft bei der potentiellen Berührungsstelle aus einer Änderung der Vergleichskapazitätswerte des Knotens (120) an der potentiellen Berührungsstelle, während keine Berührung erfolgt und während eine Berührung erfolgt.

2. Verfahren nach Anspruch 1, das ferner die folgenden Schritte umfasst:

Feststellen, ob wenigstens einer der Eigenwerte größer als ein Eigenberührungsschwellenwert ist, wobei wenn ja, dann Weitergehen zum Schritt zum Abtasten mehrerer Knoten des wenigstens einen Kanals, der den größten Eigenwert aufweist, und wenn nein, dann Beenden eines Berührungsdetektionsrahmens als abgeschlossen.

3. Verfahren nach Anspruch 1, das ferner die folgenden Schritte umfasst:
Feststellen eines linken und eines rechten Anstiegswerts für den wenigstens einen Eigenwert, wobei:

der linke Anstiegswert dem wenigstens einen Eigenwert minus einem Eigenwert eines Kanals links des wenigstens einen Kanals entspricht, und
der rechte Anstiegswert dem wenigstens einen Eigenwert minus einem Eigenwert eines Kanals rechts des wenigstens einen Kanals entspricht.

4. Verfahren nach Anspruch 3, das ferner die folgenden Schritte umfasst:

Feststellen, ob der linke Anstiegswert größer als Null (0) ist und der rechte Anstiegswert kleiner als Null (0) ist, wobei wenn ja, dann Zurückkehren zum Schritt zum Abtasten der Vielzahl von Knoten des wenigstens einen Kanals, und wenn nein, dann Weitergehen zum nächsten Schritt;
Feststellen, ob der linke Anstiegswert größer als Null (0) und größer als der rechte Anstiegswert ist, wobei wenn ja, dann Zurückkehren zum Schritt zum Abtasten der Vielzahl von Knoten des wenigstens einen Kanals, und wenn nein, dann Weitergehen zum nächsten Schritt;
Feststellen, ob der linke Anstiegswert kleiner als Null (0) und größer als ein prozentualer Anteil des rechten Anstiegswerts ist, wobei wenn ja, dann Zurückkehren zum Schritt zum Abtasten der Vielzahl von Knoten des wenigstens einen Kanals, und wenn nein, dann Weitergehen zum nächsten Schritt;
Feststellen, ob es einen weiteren Eigenwert gibt, wobei wenn ja, dann Zurückkehren zum Schritt zum Feststellen unter Verwendung des weiteren Eigenwerts, ob wenigstens einer der Eigenwerte größer als der Eigenberührungsschwellenwert ist, und wenn nein, dann Beenden eines Berührungsdetektionsrahmens als abgeschlossen.

5. Verfahren nach Anspruch 2, das ferner die folgenden Schritte umfasst:

Feststellen, ob wenigstens einer der Vergleichswerte größer als ein Vergleichsberührungsschwellenwert ist, wobei
wenn ja, dann Weitergehen zum Schritt zum Abtasten mehrerer Knoten (120) des wenigstens einen Kanals (104), der den größten Eigenwert aufweist, und
wenn nein, dann Beenden des Berührungsdetektionsrahmens als abgeschlossen.

6. Verfahren nach Anspruch 5, das ferner die folgenden Schritte umfasst:

Feststellen eines nächsten Anstiegswerts, wobei der nächste Anstiegswert einem aktuellen Vergleichswert minus einem nächsten Vergleichswert eines nächsten Knotens (120) entspricht; und
Feststellen eines vorhergehenden Anstiegswerts, wobei der vorhergehende Anstiegswert dem aktuellen Vergleichswert minus einem vorhergehenden Vergleichswert eines vorhergehenden Knotens (120) entspricht.

7. Verfahren nach Anspruch 6, das ferner die folgenden Schritte umfasst:

Feststellen, ob der nächste Anstiegswert kleiner als Null (0) ist und der vorhergehende Anstiegswert größer als Null (0) ist, wobei

wenn ja, dann Starten des Schritts zur Validierung des Knotens (120), und
wenn nein, dann Weitergehen zum nächsten Schritt;

Feststellen, ob der nächste Anstiegswert größer als Null (0) und kleiner als ein prozentualer Anteil des vorhergehenden Anstiegswerts ist, wobei

wenn ja, dann Starten des Schritts zur Validierung des Knotens (120), und
wenn nein, dann Weitergehen zum nächsten Schritt;
Feststellen, ob der nächste Anstiegswert kleiner als Null (0) und größer als der vorhergehende Anstiegswert ist, wobei
wenn ja, dann Starten des Schritts zur Validierung des Knotens (120), und
wenn nein, dann Weitergehen zum nächsten Schritt;

Feststellen, ob es einen weiteren Vergleichswert gibt, wobei

wenn ja, dann Zurückkehren zum Schritt zum Feststellen, ob wenigstens einer der Vergleichswerte größer als der Vergleichsberührungsschwellenwert ist, und
wenn nein, dann Weitergehen zum nächsten Schritt; und

Feststellen, ob es einen weiteren Eigenwert gibt, wobei

wenn ja, dann Prüfen eines weiteren Eigenwerts und Zurückkehren zum Schritt zum Feststellen, ob wenigstens einer der Eigenwerte größer als ein Eigenberührungsschwellenwert ist, und
wenn nein, dann Beenden eines Berührungsdetektionsrahmens als abgeschlossen.

8. Verfahren nach Anspruch 7, wobei die Knoten in einer Matrix angeordnet sind, die sich auf einer X-Achse von Osten nach Westen und auf einer Y-Achse von Norden nach Süden erstreckt, und wobei der Schritt zur Validierung des Knotens die folgenden Schritte umfasst:

Identifizieren des Knotens (120), der einen lokalen maximalen Vergleichswert aufweist, als einen aktuellen Knoten;
Feststellen, ob es einen gültigen Knoten nördlich von dem aktuellen Knoten gibt, wobei

wenn nein, dann Weitergehen zum Schritt zum Feststellen, ob es einen gültigen Knoten südlich von dem aktuellen Knoten gibt, und
wenn ja, dann Durchführen einer Vergleichsmessung an dem nördlichen Knoten und Weitergehen zum nächsten Schritt;

Feststellen, ob der nördliche Knoten größer als der aktuelle Knoten ist,

wenn ja, dann Übernehmen des nördlichen Knotens als den aktuellen Knoten und Weitergehen zum Schritt zum Feststellen, ob an diesem Knoten bereits ein Berührungspunkt vorliegt, und
wenn nein, dann Weitergehen zum nächsten Schritt;

Feststellen, ob es einen gültigen Knoten südlich von dem aktuellen Knoten gibt, wobei

wenn nein, dann Weitergehen zum Schritt zum Feststellen, ob es einen gültigen Knoten östlich von dem aktuellen Knoten gibt, und
wenn ja, dann Durchführen einer Vergleichsmessung an dem südlichen Knoten und Weitergehen zum nächsten Schritt;

Feststellen, ob der südliche Knoten größer als der aktuelle Knoten ist, wobei

wenn ja, dann Übernehmen des südlichen Knotens als den aktuellen Knoten und Weitergehen zum Schritt zum Feststellen, ob an diesem Knoten bereits ein Berührungspunkt vorliegt, und
wenn nein, dann Weitergehen zum nächsten Schritt;

Feststellen, ob es einen gültigen Knoten östlich von dem aktuellen Knoten gibt, wobei

wenn nein, dann Weitergehen zum Schritt zum Feststellen, ob es einen gültigen Knoten westlich von dem aktuellen Knoten gibt, und
wenn ja, dann Durchführen einer Vergleichsmessung an dem östlichen Knoten und Weitergehen zum nächsten Schritt;

Feststellen, ob der östliche Knoten größer als der aktuelle Knoten ist,

wenn ja, dann Übernehmen des östlichen Knotens als den aktuellen Knoten und Weitergehen zum Schritt zum Feststellen, ob an diesem Knoten bereits ein Berührungspunkt vorliegt, und
wenn nein, dann Weitergehen zum nächsten Schritt;

Feststellen, ob es einen gültigen Knoten westlich von dem aktuellen Knoten gibt, wobei

wenn nein, dann Weitergehen zum Schritt zum Feststellen, ob es einen gültigen Knoten links von dem aktuellen Knoten gibt, und
wenn ja, dann Durchführen einer Vergleichsmessung an dem westlichen Knoten und Weitergehen zum nächsten Schritt;

Feststellen, ob der westliche Knoten größer als der aktuelle Knoten ist,

wenn ja, dann Übernehmen des westlichen Knotens als den aktuellen Knoten und Weitergehen zum Schritt zum Feststellen, ob an diesem Knoten bereits ein Berührungspunkt vorliegt, und
wenn nein, dann Weitergehen zum nächsten Schritt;

Feststellen, ob es einen gültigen Knoten links von dem aktuellen Knoten gibt, wobei

wenn nein, dann Definieren eines linken Vergleichswerts als einen zentralen Vergleichswert minus einem rechten Vergleichswert und Weitergehen zum Schritt zum Feststellen einer Feinposition für den Knoten, und
wenn ja, dann Durchführen einer Vergleichsmessung an dem linken Knoten und Weitergehen zum nächsten Schritt;

Feststellen, ob es einen gültigen Knoten rechts von dem aktuellen Knoten gibt, wobei

wenn nein, dann Definieren des Vergleichswerts als den zentralen Vergleichswert minus dem linken Vergleichswert und Weitergehen zum Schritt zum Feststellen der Feinposition für den Knoten, und
wenn ja, dann Durchführen einer Vergleichsmessung an dem rechten Knoten und Weitergehen zum nächsten Schritt;

Definieren eine Feinposition des Knotens durch Subtrahieren des linken Werts von dem rechten Wert, Dividieren dieser Differenz durch den zentralen Wert und Multiplizieren des Ergebnisses durch 64 und Weitergehen zum nächsten Schritt; und
Feststellen, ob eine Interpolation für jede Achse durchgeführt wurde, wobei

wenn ja, dann Hinzufügen eines weiteren Berührungspunktes zu einer Liste aller detektierten Berührungspunkte und Zurückkehren zum Schritt zum Feststellen, ob es zusätzliche Vergleichswerte gibt, und
wenn nein, dann Interpolieren einer weiteren Achse durch Verwenden eines linken und eines rechten Knotens der weiteren Achse zum erneuten Starten beim Schritt zum Feststellen, ob es einen gültigen Knoten links von dem aktuellen Knoten gibt.

9. System zum Feststellen von Gestikulationsbewegungen und -kräften, wobei das System Folgendes umfasst:

eine berührungsempfindliche Oberfläche (102), die eine optische Anzeige aufweist und mehrere verformbare Abstandselemente (334) zwischen der biegsamen, elektrisch leitenden Abdeckung (103) und der ersten Vielzahl von Elektroden (104) umfasst, wobei die mehreren verformbaren Abstandselemente (334) einen Abstand zwischen der biegsamen, elektrisch leitenden Abdeckung (103) und der ersten Vielzahl von Elektroden (104) aufrechterhält;
wobei die erste Vielzahl von Elektroden (104) in einer parallelen Ausrichtung angeordnet ist, die eine erste Achse aufweist, wobei jede der ersten Vielzahl von Elektroden (104) einen der Kanäle bildet;
eine zweite Vielzahl von Elektroden (105), die in einer parallelen Ausrichtung angeordnet sind, die eine zweite Achse aufweist, die im Wesentlichen senkrecht zur ersten Achse verläuft, wobei die erste Vielzahl von Elektroden (104) über der zweiten Vielzahl von Elektroden (105) angeordnet ist und mehrere Knoten bildet, die überlappende Überschneidungen der ersten und der zweiten Vielzahl von Elektroden umfassen, wobei jeder der Vielzahl von Knoten eine Vergleichskapazität aufweist;

eine biegsame elektrisch leitfähige Abdeckung (103) über der ersten Vielzahl von Elektroden (104), wobei eine Seite der biegsamen elektrisch leitfähigen Abdeckung (103) die berührungsempfindliche Oberfläche bildet; einen digitalen Prozessor und einen Speicher (106), wobei digitale Ausgangssignale des digitalen Prozessors (106) mit der ersten und der zweiten Vielzahl von Elektroden (104, 105) gekoppelt sind; ein analoges Frontend (110), das mit der ersten und der zweiten Vielzahl von Elektroden (104, 105) gekoppelt ist; einen Analog-Digital-Umsetzer (ADC) (108), der wenigstens einen digitalen Ausgang aufweist, der mit dem digitalen Prozessor (106) gekoppelt ist; wobei der digitale Prozessor (106) konfiguriert ist, die Schritte nach dem Verfahren nach einem der vorhergehenden Ansprüche auszuführen.

**10.** System nach Anspruch 9, wobei der digitale Prozessor, der Speicher, das analoge Frontend und der ADC durch eine digitale Vorrichtung (112) bereitgestellt werden.

**11.** System nach Anspruch 10, wobei die digitale Vorrichtung (112) einen Mikrocontroller umfasst.

**12.** System nach einem der vorhergehenden Ansprüche 9-11, wobei die biegsame elektrisch leitfähige Abdeckung (103) einen biegsamen Metallträger umfasst.

**13.** System nach einem der vorhergehenden Ansprüche 9-11, wobei die biegsame elektrisch leitfähige Abdeckung (103) einen biegsamen nichtmetallischen Träger und eine elektrisch leitfähige Beschichtung auf einer Oberfläche umfasst.

**14.** System nach einem der vorhergehenden Ansprüche 9-11, wobei die biegsame elektrisch leitfähige Abdeckung (103) einen im Wesentlichen lichtdurchlässigen biegsamen Träger und eine Beschichtung aus Indium-Zinnoxid (ITO) auf einer Oberfläche des biegsamen Trägers umfasst.

**15.** System nach einem der vorhergehenden Ansprüche 9-11, wobei die biegsame elektrisch leitfähige Abdeckung (103) einen im Wesentlichen lichtdurchlässigen biegsamen Träger und eine Beschichtung aus Antimon-Zinnoxid (ATO) auf einer Oberfläche des biegsamen Trägers (103) umfasst.

## Revendications

**1.** Procédé de décodage de multiples contacts et de forces de ceux-ci sur une surface de détection de contact, dans lequel ladite surface de détection de contact comprend une pluralité de pièces d'espacement déformables (334) agencées entre un couvercle souple électriquement conducteur (103) et une première pluralité d'électrodes (104), la pluralité de pièces d'espacement déformables (334) maintenant une distance entre le couvercle souple électriquement conducteur (103) et la première pluralité d'électrodes (104), ledit procédé comprenant les étapes suivantes :

le balayage d'une pluralité de canaux (104) alignés sur un axe pour déterminer des valeurs de capacité propre de chacun de la pluralité de canaux (104), dans lequel chaque canal (104) est formé par une de la première pluralité d'électrodes (104) ;
la comparaison des valeurs de capacité propre pour déterminer celui des canaux (104) qui présente une valeur de capacité propre locale maximale ;
le balayage d'une pluralité de noeuds (120) d'au moins un canal (104) présentant une valeur de capacité propre locale maximale déterminée pour déterminer des valeurs mutuelles des noeuds (120) ;
la comparaison des valeurs mutuelles pour déterminer celui des noeuds (120) qui présente la plus grande valeur de capacité mutuelle, dans lequel le noeud (120) présentant la plus grande valeur de capacité mutuelle sur le canal de valeur de capacité propre locale maximale est une position de contact potentielle; et
la détermination d'une force à la position de contact potentielle à partir d'un changement des valeurs de capacité mutuelle du noeud (120) à la position de contact potentielle durant l'absence de contact et durant un contact avec celle-ci.

**2.** Procédé selon la revendication 1, comprenant en outre les étapes suivantes :
la détermination qu'au moins une des valeurs propres est supérieure ou non à un seuil de contact propre,

dans l'affirmative le passage alors à l'étape de balayage d'une pluralité de noeuds de l'au moins un canal présentant la plus grande valeur propre, et

dans la négative l'arrêt alors de la trame de détection de contact comme étant terminée.

3. Procédé selon la revendication 1, comprenant en outre l'étape suivante :
   détermination de valeurs de pente gauche et droite de l'au moins une valeur propre, dans lequel :

   la valeur de pente gauche est égale à l'au moins une valeur propre d'un canal à gauche de l'au moins un canal, et
   la valeur de pente droite est égale à l'au moins une valeur propre d'un canal à droite de l'au moins un canal.

4. Procédé selon la revendication 3, comprenant en outre les étapes suivantes :

   la détermination que la valeur de pente gauche est supérieure ou non à zéro (0) et que la valeur de pente droite est inférieure ou non à zéro (0), dans l'affirmative le retour alors à l'étape de balayage de la pluralité de noeuds de l'au moins un canal, et dans la négative le passage alors à l'étape suivante ;
   la détermination que la valeur de pente gauche est supérieure ou non à zéro (0) et supérieure ou non à la valeur de pente droite, dans l'affirmative le retour alors à l'étape de balayage de la pluralité de noeuds de l'au moins un canal, et dans la négative le passage alors à l'étape suivante ;
   la détermination que la valeur de pente gauche est inférieure ou non à zéro (0) et supérieure ou non à un pourcentage de la valeur de pente droite, dans l'affirmative le retour alors à l'étape de balayage de la pluralité de noeuds de l'au moins un canal, et dans la négative le passage alors à l'étape suivante ;
   la détermination qu'il existe ou non une autre valeur propre, dans l'affirmative le retour alors à l'étape de détermination qu'au moins une des valeurs propres est supérieure ou non à la valeur de seuil de contact propre en utilisant l'autre valeur propre, et dans la négative l'arrêt alors de la trame de détection de contact comme étant terminée.

5. Procédé selon la revendication 2, comprenant en outre les étapes suivantes :
   la détermination qu'au moins une des valeurs mutuelles est supérieure ou non à un seuil de contact mutuel,

   dans l'affirmative le passage alors à l'étape de balayage d'une pluralité de noeuds (120) de l'au moins un canal (104) présentant la plus grande valeur propre, et
   dans la négative l'arrêt alors de la trame de détection de contact comme étant terminée.

6. Procédé selon la revendication 5, comprenant en outre les étapes suivantes :

   la détermination d'une valeur de pente suivante, dans lequel la valeur de pente suivante est égale à une valeur mutuelle courante moins une valeur mutuelle suivante d'un noeud suivant (120) ; et
   la détermination d'une valeur de pente précédente, dans lequel la valeur de pente précédente est égale à la valeur mutuelle courante moins une valeur mutuelle précédente d'un noeud précédent (120).

7. Procédé selon la revendication 6, comprenant en outre les étapes suivantes :

   la détermination que la valeur de pente suivante est inférieure ou non à zéro (0) et que la valeur de pente précédente est supérieure ou non à zéro (0),

   dans l'affirmative le lancement alors de l'étape de validation du noeud (120), et
   dans la négative le passage alors à l'étape suivante ;

   la détermination que la valeur de pente suivante est supérieure ou non à zéro (0) et inférieure ou non à un pourcentage de la valeur de pente précédente,

   dans l'affirmative le lancement alors de l'étape de validation du noeud (120), et
   dans la négative le passage alors à l'étape suivante ;

   la détermination que la valeur de pente suivante est inférieure ou non à zéro (0) et supérieure ou non à la valeur de pente précédente,

   dans l'affirmative le lancement alors de l'étape de validation du noeud (120), et
   dans la négative le passage alors à l'étape suivante ;

la détermination qu'il existe ou non une autre valeur mutuelle,

dans l'affirmative le retour alors à l'étape de détermination qu'au moins une des valeurs mutuelles est supérieure ou non au seuil de contact mutuel, et
dans la négative le passage alors à l'étape suivante ; et

la détermination qu'il existe ou non une autre valeur propre,

dans l'affirmative l'examen alors d'une autre valeur propre et le retour à l'étape de détermination qu'au moins une des valeurs propres est supérieure ou non à un seuil de contact propre, et
dans la négative l'arrêt alors de la trame de détection de contact comme étant terminée.

8. Procédé selon la revendication 7, dans lequel les noeuds sont agencés dans une matrice s'étendant d'est en ouest sur un axe X et du nord au sud sur un axe Y et dans lequel l'étape de validation du noeud comprend les étapes suivantes :

l'identification du noeud (120) présentant une valeur mutuelle locale maximale en tant que noeud courant ;
la détermination qu'il existe ou non un noeud valable au nord du noeud courant,

dans la négative le passage alors à l'étape de détermination qu'il existe ou non un noeud valable au sud du noeud courant, et
dans l'affirmative la réalisation alors d'une mesure mutuelle sur le noeud nord et le passage à l'étape suivante ;

la détermination que le noeud nord est supérieur ou non au noeud courant,

dans l'affirmative l'établissement alors du noeud nord en tant que noeud courant et le passage à l'étape de détermination qu'un point de contact existe déjà ou non au niveau de ce noeud, et
dans la négative le passage alors à l'étape suivante ;

la détermination qu'il existe ou non noeud valable au sud du noeud courant,

dans la négative le passage alors à l'étape de détermination qu'il existe ou non un noeud valable à l'est du noeud courant, et
dans l'affirmative la réalisation alors d'une mesure mutuelle sur le noeud sud et le passage à l'étape suivante ;

la détermination que le noeud sud est supérieur ou non au noeud courant,

dans l'affirmative l'établissement alors du noeud sud en tant que noeud courant et le passage à l'étape de détermination qu'un point de contact existe déjà ou non au niveau de ce noeud, et
dans la négative le passage alors à l'étape suivante ;

la détermination qu'il existe ou non un noeud valable à l'est du noeud courant,

dans la négative le passage alors à l'étape de détermination qu'il existe ou non un noeud valable à l'ouest du noeud courant, et
dans l'affirmative la réalisation alors d'une mesure mutuelle sur le noeud est et le passage à l'étape suivante ;

la détermination que le noeud est est supérieur ou non au noeud courant,

dans l'affirmative l'établissement alors du noeud est en tant que noeud courant et le passage à l'étape de détermination qu'un point de contact existe déjà ou non au niveau de ce noeud, et
dans la négative le passage alors à l'étape suivante ;

la détermination qu'il existe ou non un noeud valable à l'ouest du noeud courant,

dans la négative le passage alors à l'étape de détermination qu'il existe ou non un noeud valable à gauche du noeud courant, et
dans l'affirmative la réalisation alors d'une mesure mutuelle sur le noeud ouest et le passage à l'étape suivante ;

la détermination que le noeud ouest est supérieur ou non au noeud courant,

dans l'affirmative l'établissement alors du noeud ouest en tant que noeud courant et le passage à l'étape de détermination qu'un point de contact existe déjà ou non au niveau de ce noeud, et
dans la négative le passage alors à l'étape suivante ;

la détermination qu'il existe ou non un noeud valable à gauche du noeud courant,

dans la négative la définition alors d'une valeur mutuelle gauche en tant que valeur mutuelle centrale moins une valeur mutuelle droite et le passage à l'étape de détermination d'une position précise du noeud , et
dans l'affirmative la réalisation alors d'une mesure mutuelle sur le noeud gauche et le passage à l'étape suivante ;

la détermination qu'il existe ou non un noeud valable à droite du noeud courant,

dans la négative la définition alors de la valeur mutuelle en tant que valeur mutuelle centrale moins la valeur mutuelle gauche et le passage à l'étape de détermination de la position précise du noeud , et
dans l'affirmative la réalisation alors d'une mesure mutuelle sur le noeud droit et le passage à l'étape suivante ;

la définition d'une position précise du noeud en soustrayant la valeur gauche de la valeur droite, divisant cette différence par la valeur centrale et multipliant le résultat par 64 et le passage à l'étape suivante ; et
la détermination qu'une interpolation a été exécutée ou non pour chaque axe,

dans l'affirmative, l'ajout alors d'un autre point de contact à une liste de tous les points de contact détectés et le retour à l'étape de détermination qu'il existe ou non d'autres valeurs mutuelles, et
dans la négative, l'interpolation d'un autre axe en utilisant des noeuds gauche et droit de l'autre axe pour reprendre l'étape de détermination qu'il existe ou non un noeud valable à gauche du noeud courant.

9. Système de détermination de mouvements gestuels et de leurs forces, ledit système comprenant :

une surface de détection de contact (102) présentant un afficheur visuel et comprenant ladite pluralité de pièces d'espacement déformables (334) entre le couvercle souple électriquement conducteur (103) et la première pluralité d'électrodes (104) ;
dans lequel la pluralité de pièces d'espacement déformables (334) maintient une distance entre le couvercle souple électriquement conducteur (103) et la première pluralité d'électrodes (104) ;
dans lequel la première pluralité d'électrodes (104) est agencée dans une orientation parallèle ayant un premier axe, chacune de la première pluralité d'électrodes (104) formant un desdits canaux ;
une seconde pluralité d'électrodes (105) agencée dans une orientation parallèle ayant un second axe sensiblement perpendiculaire au premier axe, la première pluralité d'électrodes (104) étant placée par-dessus la seconde pluralité d'électrodes (105) et formant une pluralité de noeuds comprenant des intersections chevauchantes des première et seconde pluralités d'électrodes, dans lequel chacun de la pluralité de noeuds comprend une capacité mutuelle ;
un couvercle souple électriquement conducteur (103) par-dessus la première pluralité d'électrodes (104), dans lequel une face du couvercle souple électriquement conducteur (103) forme la surface de détection de contact ;
un processeur numérique et une mémoire (106), dans lequel des sorties numériques du processeur numérique (106) sont couplées aux première et seconde pluralités d'électrodes (104, 105) ;
un frontal analogique (110) couplé aux première et seconde pluralités d'électrodes (104, 105) ;
un convertisseur analogique/numérique (ADC) (108) présentant au moins une sortie numérique couplée au processeur numérique (106) ;
dans lequel le processeur numérique (106) est configuré pour exécuter les étapes conformément au procédé selon l'une des revendications précédentes.

10. Système selon la revendication 9, dans lequel le processeur numérique, la mémoire, le frontal analogique et l'ADC sont fournis par un dispositif numérique (112).

**11.** Système selon la revendication 10, dans lequel le dispositif numérique (112) comprend un microcontrôleur.

**12.** Système selon l'une des revendications précédentes 9 à 11, dans lequel le couvercle souple électriquement conducteur (103) comprend un substrat métallique souple.

**13.** Système selon l'une des revendications précédentes 9 à 11, dans lequel le couvercle souple électriquement conducteur (103) comprend un substrat non métallique souple et un revêtement électriquement conducteur sur une surface de celui-ci.

**14.** Système selon l'une des revendications précédentes 9 à 11, dans lequel le couvercle souple électriquement conducteur (103) comprend un substrat souple sensiblement transmetteur de lumière et un revêtement d'oxyde d'étain à l'indium (ITO) sur une surface du substrat souple.

**15.** Système selon l'une des revendications précédentes 9 à 11, dans lequel le couvercle souple électriquement conducteur (103) comprend lumière et un revêtement d'oxyde d'étain à l'antimoine (ATO) sur une surface du substrat souple (103).

**Figure 1**

Figure 2

(a)

(b)

103

234

238

236

232

242

**Figure 3**

**Figure 4A**

105

105

120 typ.

105

104

104

104

120

120

120

120

102a

Figure 4B

Figure 4C

Figure 4D

Figure 4E

Figure 4F

Figure 1G

Figure 4H

Figure 4I

EP 3 132 330 B1

Figure 4J

EP 3 132 330 B1

Figure 4K

Figure 5

**Figure 6**

EP 3 132 330 B1

EP 3 132 330 B1

(a)       (b)       (c)

**Figure 7**

|  | | | Cache Window | | | | | 104 typ. |
|---|---|---|---|---|---|---|---|---|

Row 9 ⇨

| 9, 0 | 9, 1 | 9, 2 | 9, 3 | 9, 4 | 9, 5 | 9, 6 | 9, 7 | 9, 8 | 9, 9 |
|------|------|------|------|------|------|------|------|------|------|
| 8, 0 | 8, 1 | 8, 2 | 8, 3 | 8, 4 | 8, 5 | 8, 6 | 8, 7 | 8, 8 | 8, 9 |
| 7, 0 | 7, 1 | 7, 2 | 7, 3 | 7, 4 | 7, 5 | 7, 6 | 7, 7 | 7, 8 | 7, 9 |
| 6, 0 | 6, 1 | 6, 2 | 6, 3 | 6, 4 | 6, 5 | 6, 6 | 6, 7 | 6, 8 | 6, 9 |
| 5, 0 | 5, 1 | 5, 2 | 5, 3 | 5, 4 | 5, 5 | 5, 6 | 5, 7 | 5, 8 | 5, 9 |
| 4, 0 | 4, 1 | 4, 2 | 4, 3 | 4, 4 | 4, 5 | 4, 6 | 4, 7 | 4, 8 | 4, 9 |
| 3, 0 | 3, 1 | 3, 2 | 3, 3 | 3, 4 | 3, 5 | 3, 6 | 3, 7 | 3, 8 | 3, 9 |
| 2, 0 | 2, 1 | 2, 2 | 2, 3 | 2, 4 | 2, 5 | 2, 6 | 2, 7 | 2, 8 | 2, 9 |
| 1, 0 | 1, 1 | 1, 2 | 1, 3 | 1, 4 | 1, 5 | 1, 6 | 1, 7 | 1, 8 | 1, 9 |
| 0, 0 | 0, 1 | 0, 2 | 0, 3 | 0, 4 | 0, 5 | 0, 6 | 0, 7 | 0, 8 | 0, 9 |

Row 0 ⇨

Column 0 ⇧          Column 9 ⇧

102

## Figure 8

Self Scan Values

422

420

Mutual Scan Values

B

| 90 | | | | | | | | |
|---|---|---|---|---|---|---|---|---|
| 80 | | | | | | | | |
| 70 | | | | | | | | |
| 60 | | | | | | | | |
| 50 | | | | | | | | |
| 40 | | | | | | | | |
| 30 | | | | | | | | |
| 20 | | | | | | | | |
| 10 | | | | | | | | |
| 0 | | | | | | | | |
| 3 | 3 | 33 | 80 | 73 | 31 | 2 | 3 | 3 |

| 2 | 3 | 0 | 3 | 1 | 0 | 0 | 0 | 3 |
|---|---|---|---|---|---|---|---|---|
| 1 | 3 | 3 | 13 | 33 | 16 | 0 | 3 | 1 |
| 0 | 1 | 0 | 22 | 73 | 31 | 1 | 2 | 2 |
| 1 | 1 | 0 | 13 | 31 | 17 | 2 | 2 | 0 |
| 1 | 0 | 0 | 2 | 1 | 3 | 0 | 2 | 0 |
| 2 | 0 | 3 | 3 | 1 | 1 | 0 | 3 | 0 |
| 1 | 3 | 2 | 1 | 6 | 0 | 2 | 3 | 3 |
| 3 | 3 | 2 | 30 | 17 | 1 | 1 | 0 | 2 |
| 1 | 1 | 33 | 80 | 31 | 3 | 2 | 1 | 1 |
| 2 | 3 | 2 | 33 | 2 | 3 | 1 | 3 | 2 |
| 3 | 3 | 3 | 0 | 0 | 0 | 1 | 1 | 3 |
| 3 | 1 | 2 | 1 | 2 | 3 | 2 | 3 | 3 |

A

Figure 9

EP 3 132 330 B1

Current
C

1

-1
A History

1

Current
D

2

1

-1 History
B

Weights
AC = 1
AD = 1
BC = 2
BD = 1

**Figure 10**

1

2

X
A

X
B

**Figure 11**

1022

102

**Normal Touch**

**(a)**

1020

102

1020

1026    1024

102

**Flat Finger Touch**

**(b)**

**Figure 12**

1050

**Start**

1052

Device power on

1054

Device initialization

1056

Perform
"Touch Identification"

1057

Perform
"Force Identification"

1058

Perform
"Touch & Force Tracking"

1060

Transmit/further process
"Touch & Force Data"

1062

Perform other
Device processes

**Figure 13**

# Touch Identification

**Figure 14**

# Touch Identification

**Figure 15**

# Nudge & Interpolation

**Figure 16**

# Nudge & Interpolation

**1470** Is there a valid node to the east?

(H) From Fig. 16

—No— **1478** Is there a valid node to the west?

**Yes** → **1472** Perform mutual measurement on node to the east

**Yes** → **1480** Perform mutual measurement on node to the west

No →

No

**1474** Is east node > current node?

**1482** Is west node > current node? —No→

No

(L) To Fig. 18

**Yes** ↓ **1476** Set current node to east node

**Yes** ↓ **1484** Set current node to west node

From Fig. 16 (J)

**1486** Does a point already exist at the selected node?

To Fig. 16 (G) ←No—

**Yes** ↓ **1488** Since a point already exists, operation complete, return to Peak Search

To Fig. 15 (N) ←

**Figure 17**

## Nudge & Interpolation

From Fig. 17 (L)

Interpolation

**1502** — Is there a valid node to the left?

**1518** — Interpolate other axis

Yes → **1504** — Perform mutual measurement on the node to the left

No → **1510** — Define left value as center value – right value

**1506** — Is there a valid node to the right?

No → **1512** — Define right value as center value – left value

Yes → **1508** — Perform mutual measurement on the node to the right

**1514** — Interpolation performed for each axis?

No

**1516** — Determine a fine position using the equation: (right value – left value)/(center value)*64

Yes

**1522** — Return to Peak Search

(M)
To Fig. 15

**1520** — Add point to a list of all detected points

(U)
To Fig. 19

**Figure 18**

# Force Identification

From Fig. 18

U

Start Force
Determination  /1550

Calculate change in
capacitance value of
location at detected point  /1552

Convert change in
capacitance value of
location to force thereto  /1554

Associate force with
detected point in list of all
detected points  /1556

# Figure 19

# Tracking

**Figure 20**

## Tracking

From Fig. 20

(N)

From Fig. 22

(O)

To Fig. 22

(R)

**1740**

Calculate next worst weight for the current location and for an assigned current location

**1722**

Are there any previous touch locations?

—No→(T)

To Fig. 22

Yes

Yes

Is the temporary location already assigned to a different current location?

**1738**

**1724**

Set a temporary weight to maximum

(Q)←No—

To Fig. 22

**1726**

Select the first of the previous touch locations

**1736**

Select the next previous touch location

No

**1728**

Measure the distance (weight) between the selected current touch location and the selected previous location

Yes

Are there more previous touch locations?

**1734**

**1730**

Is the distance (weight) less than the temporary weight?

—No—→

**1732**

Set the temporary weight to the current weight then record selected previous touch location as temporary location

—Yes—

## Figure 21

# Tracking

From Fig. 21

(R)

**1860**
Is the next worst weight for the current location < next worst weight for the assigned location?

No

Yes

**1862**
Set the temporary location to the next worst location

**1864**
Set the assigned location to the next worst weight

**1866**
Select the moved assignment location

To Fig. 21 (O)

From Fig. 21 (T)

**1868**
New touch to track at current location

From Fig. 21

(Q)

**1850**
Is the weight below the maximum association threshold?

Yes

No

**1852**
Assign the temporary location to the current location

**1854**
New touch location identified for tracking

**1856**
Are there more current touch locations?

No

(S)

To Fig. 20

Yes

**1858**
Select the next current touch location

(O)

To Fig. 21

**Figure 22**

# Column Cache

**Mutual scan location request received** 1902

**Return scan data from cache** 1922

**Does cache contain area requested?** 1904 —Yes→ **Is valid scan data in the cache?** 1920

Yes

No

**Perform a mutual scan at requested location** 1918

No

**Place scan data to location in cache** 1916

**Is the requested location beyond the right edge of the cache?** 1906 —No

Yes

**De-allocate left-most column of cache** 1908

**De-allocate right-most column of cache** 1914

**Allocate de-allocated data to right edge of cache and move edge values** 1910

**Allocate de-allocated data to left edge of cache and move edge values** 1912

## Figure 23

**Figure 24**

**Figure 25**

**Figure 26**

102

Document

2710

2402

2712

2400

Figure 27

102

2814

124779

2402

2400

**Figure 28**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130257799 A
- US 20090231305 A
- US 20100181180 A
- US 7460441 B2
- US 7764213 B2
- US 20120113047 A

**Non-patent literature cited in the description**

- **KEITH CURTIS ; DIETER PETER.** mTouch™ Metal over Cap Technology. *Application Note AN1325, www.microchip.com.*
- *Microchip Technology Incorporated application notes AN1298, AN1325 and AN1334, www.microchip.com.*